# EUROPÄISCHE PATENTSCHRIFT

(11) **EP 4 084 980 B1**
(45) Veröffentlichungstag und Bekanntmachung des Hinweises auf die Patenterteilung: **16.07.2025**
(21) Anmeldenummer: 20848993.0
(22) Anmeldetag: 30.12.2020
(51) Int. Cl.: F28D 20/00

(54) **VERFAHREN UND VORRICHTUNG ZUM ERZEUGEN UND SPEICHERN VON WÄRME**
METHOD AND DEVICE FOR GENERATING AND STORING HEAT
PROCÉDÉ ET DISPOSITIF PERMETTANT DE PRODUIRE ET DE STOCKER DE LA CHALEUR

(30) Priorität: 30.12.2019 CH 17152019
(43) Veröffentlichungstag der Anmeldung: 09.11.2022
(73) Patentinhaber: Trebuchet B.V., 2514 HE Den Haag (NL); Mihara GmbH, 8041 Zurich (CH); Adamczyk, Jens Markus, 21335 Lüneburg (DE)
(72) Erfinder: VAN WAGTENDONK, Kim, 2585 SC Den Haag (NL); KRUMPHOLZ, Erhard, 8041 Zürich (CH); ADAMCZYK, Jens Markus, 21335 Lüneburg (DE); PORSCHE, Steffen, 4663 Aarburg (CH); SCHNEIDER, Thomas, 5240 Ehrendingen (CH)
(74) Vertreter: Patentanwälte Bregenzer und Reule Partnerschaftsgesellschaft mbB
(86) Internationale Anmeldenummer: PCT/IB2020/001020
(87) Internationale Veröffentlichungsnummer: WO 2021/136959

(56) Entgegenhaltungen:
- EP-A2- 0 216 237
- WO-A1-2014/063814
- WO-A1-99/53257
- WO-A2-2011/054676
- DE-A1- 102012 204 722
- DE-A1- 102015 212 406
- DE-A1- 102016 217 090
- DE-T5- 112015 005 092
- FR-A1- 2 455 713
- US-A- 4 161 211
- US-A- 4 303 121

## Beschreibung

Die Erfindung bezieht sich auf ein Verfahren und eine Vorrichtung zum Erzeugen von Wärme sowie auf ein Verfahren und eine Vorrichtung zum Speichern von Wärme.

Derartige Verfahren und Vorrichtungen sind bekannt.

Erwähnenswert ist die Verwendung von Speichern zur Speicherung sensibler Wärme. Die Verwendung mit Wasser gefüllter Behälter als Wärmespeicher ist aufgrund der hohen Wärmekapazität von Wasser sowie dessen geringen Kosten und geringer Gefahr für die Umwelt besonders beliebt. Nachteilig ist dabei, dass die Temperaturänderung des Wassers in dem Behälter proportional zu der aufgenommen bzw. abgegebenen Wärmemenge des Wassers ist. Wenn man grössere Wärmemengen speichert, steigt die Temperatur des Speichers gegenüber der Umgebungstemperatur innerhalb oder ausserhalb eines Gebäudes stark an, wodurch hohe Wärmeverluste des Speichers an seine Umgebung durch Wärmeleitung, Wärmestrahlung und Konvektion entstehen. Selbst mit einem hohen Aufwand an Massnahmen zur Wärmeisolation des Speichers ist eine saisonale Speicherung von Wärme kaum möglich. Lediglich die Verwendung riesiger Wasserkörper bei möglichst kleinem Oberfläche/Volumen-Verhältnis kommt hierfür in Frage.

Erwähnenswert ist auch die Verwendung von Speichern zur Speicherung latenter Wärme. Die Verwendung mit Phasenwechselmaterial gefüllter Behälter als Wärmespeicher ist aufgrund der hohen Energiedichte sehr interessant. Besonders beliebt sind Fest/Flüssig-Systeme, wie z.B. Eisspeicher (gefrorenes/aufgetautes Wasser), Wachsspeicher (erstarrtes/geschmolzenes Wachs), Paraffinspeicher (erstarrtes/geschmolzenes Paraffin), bei denen die Gasphase im Normalbetrieb nahe der jeweiligen Schmelztemperatur des Systems aufgrund des dort üblicherweise geringen Dampfdrucks vernachlässigbar ist. Die Schmelztemperaturen oder Schmelztemperaturbereiche solcher Fest/Flüssig-Systeme können durch die Wahl der Moleküle (Länge der Kohlenstoffketten, Verzweigungsgrad, Vorhandensein polarer Gruppen, etc.) bzw. durch Mischen verschiedener Molekülsorten in weiten Bereichen eingestellt werden. So können z.B. Schmelztemperaturen, d.h. Phasenwechselspeicher-Betriebstemperaturen von 0°C (Eisspeicher), von etwa 30 bis 60°C (Wachs/Paraffin-Speicher) oder von etwa 60 bis 90°C (gegenüber Wachs/Paraffin noch längere oder mit polaren Gruppen versehene Moleküle) bereitgestellt werden. Diese Phasenwechselspeicher haben gegenüber Speichern sensibler Wärme eine um ein Vielfaches höhere Energiespeicherdichte. Solche Phasenwechselspeicher können in Gebäuden, insbesondere in Verbindung mit Solarthermie und mit Speichertemperaturen von z.B. 30°C und 80°C, vorteilhaft zur Wärmespeicherung für einen Zeitraum von einigen Wochen verwendet werden. Eine saisonale Speicherung von Wärme ist auch hier nur begrenzt möglich und wenn, dann ebenfalls nur mit einem hohen Aufwand an Massnahmen zur Wärmeisolation des Speichers.

Die DE 10 2016 217 090 A1 offenbart ein Verfahren zum Speichern und Rückgewinnen von Wärmeenergie in einer dafür ausgelegten Anlage mit einer Reaktionskammer. Dabei erfolgt die Wärmespeicherung mittels einer endothermen Reaktion, bei welcher einer Ausgangssubstanz, z.B. Ca(OH)₂ oder Mg(OH)₂, Wärme zugeführt wird, wodurch die Ausgangssubstanz zu einer Wärmerspeichersubstanz, z.B. CaO bzw. MgO, unter Freisetzung von Wasser reagiert. Die Wärmerückgewinnung erfolgt mittels einer exothermen Reaktion, bei welcher der zuvor gebildeten Wärmespeichersubstanz Wasser zugeführt wird, wodurch die Wärmespeichersubstanz unter Aufnahme von Wasser und Freisetzung von Wärme wieder zu der Ausgangssubstanz reagiert.

Die DE 10 2015 212 406 A1 offenbart eine Vorrichtung zur Wärmespeicherung, insbesondere für Kraftfahrzeuge mit Verbrennungsmotor. Als Reaktor dient ein Behälter mit einer Substanz, welche in einem ersten Zustand (z.B. Salz-Anhydrat) und in einem zweiten Zustand (z.B. Salz-Hydrat) sein kann. In ihrem ersten Zustand (Salz-Anhydrat) kann der Substanz ein Fluid (z.B. Wasser) zugeführt werden, wobei Wärme freigesetzt wird und die Substanz in ihren zweiten Zustand (Salz-Hydrat) übergeht. In ihrem zweiten Zustand (Salz-Hydrat) kann der Substanz Wärme zugeführt werden, wobei das Fluid (z.B. Wasser) wieder freigesetzt wird und die Substanz in ihren ersten Zustand (Salz-Anhydrat) zurückkehrt. Dies ermöglicht bei einem Verbrennungsmotor die Speicherung von Abwärme, welche zeitversetzt zum Vorheizen des Motors verwendet werden kann, um die Nachteile eines Motor-Kaltstarts zu vermeiden.

Die DE 11 2015 005 092 T5 offenbart eine chemische Wärmepumpe, in welcher ein Hydrat, z.B. Ca(OH)₂ oder Mg(OH)₂, und sein korrespondierendes Anhydrat, z.B. CaO bzw. MgO, durch endotherme bzw. exotherem Reaktion und durch Abgabe bzw. Aufnahme von Wasserdampf ineinander überführt werden können. Dieses Dokument offenbart die Merkmale im Oberbegriff des Verfahrenpatentanspruchs 1 und des Vorrichtungpatentanspruchs 3.

Der Erfindung liegt die Aufgabe zugrunde, eine langfristige, insbesondere und zumindest saisonale Speicherung von Wärme ohne Massnahmen zur Wärmeisolation des Speichers zu ermöglichen.

Zur Lösung der Aufgabe stellt die Erfindung gemäss Anspruch 1 ein Verfahren zum Erzeugen (Abgeben, Freisetzen) oder Speichern von Wärme (W) bereit.

Die Erfindung stellt somit einerseits ein Verfahren bereit zum Erzeugen (Abgeben, Freisetzen) von Wärme (W) durch Reaktion zwischen einerseits einem Feststoff und/oder einer ersten Flüssigkeit (1) und andererseits einem Gas und/oder einer zweiten Flüssigkeit (2) (Ammoniak, Wasser, Alkohol, Keton), wobei die dabei entstehende Reaktionswärme (W) abgeführt wird, wobei
a1) einerseits eine dosierte Menge des Feststoffs und/oder der ersten Flüssigkeit (1) einem Reaktionsraum (R) zugeführt wird und
a2) andererseits eine dosierte Menge des Gases und/oder der zweiten Flüssigkeit (2) dem Reaktionsraum (R) zugeführt wird,
wobei in dem Reaktionsraum (R)
a1) der Feststoff und/oder die erste Flüssigkeit (1) und
a2) das Gas und/oder die zweite Flüssigkeit (2)
miteinander in Kontakt gebracht werden und die frei werdende Wärme aus dem Reaktionsraum (R) abgeführt wird,
wobei der Feststoff und/oder die erste Flüssigkeit (1) ein Anhydrat ist, wobei die Wärme durch Reaktion unter Beteiligung von Anhydrat einerseits und von Wasser und/oder Wasserdampf andererseits erzeugt wird, wobei dem Reaktionsraum (R) einerseits eine dosierte Menge des Anhydrats und andererseits eine dosierte Menge Wasser und/oder Wasserdampf zugeführt wird, und wobei ein Innenraum eines Behälters (K, K*) mit dem Anhydrat und/oder dem Hydrat partiell gefüllt ist und der Behälter (K, K*) einen semipermeablen Wandbereich (WB1, WB2) aufweist, welcher für das in ihm enthaltene Anhydrat oder Hydrat undurchlässig ist und für Wasser oder Wasserdampf durchlässig ist.

Die Erfindung stellt somit andererseits ein Verfahren bereit zum Speichern von Wärme (W) durch Reaktion zwischen einerseits einem Feststoff und/oder einer ersten Flüssigkeit (1) und andererseits einem Gas und/oder einer zweiten Flüssigkeit (2) (Ammoniak, Wasser, Alkohol, Keton), wobei die dabei zu speichernde Reaktionswärme (W) zugeführt wird, wobei
b1) einerseits eine dosierte Menge des Feststoffs und/oder der ersten Flüssigkeit (1) einem Reaktionsraum (R) zugeführt wird und
b2) andererseits eine dosierte Menge Wärme (W) dem Reaktionsraum (R) zugeführt wird,
wobei in dem Reaktionsraum (R)
b1) der Feststoff und/oder die erste Flüssigkeit (1) und
b2) die Wärme (W) miteinander in Kontakt gebracht werden und das frei werdende Gas und/oder die frei werdende zweite Flüssigkeit (2) aus dem Reaktionsraum (R) abgeführt wird bzw. werden,
wobei der Feststoff und/oder die erste Flüssigkeit (1) ein Hydrat ist, wobei die Wärme durch Reaktion unter Beteiligung von Hydrat einerseits und von Wasser und/oder Wasserdampf andererseits gespeichert wird, wobei dem Reaktionsraum (R) einerseits eine dosierte Menge des Hydrats und andererseits eine dosierte Menge Wärme zugeführt wird.
und wobei ein Innenraum eines Behälters (K, K*) mit dem Anhydrat und/oder dem Hydrat partiell gefüllt ist und der Behälter (K, K*) einen semipermeablen Wandbereich (WB1, WB2) aufweist, welcher für das in ihm enthaltene Anhydrat oder Hydrat undurchlässig ist und für Wasser oder Wasserdampf durchlässig ist.

Die Verwendung eines solchen Behälters bzw. einer solchen Kartusche oder Patrone ist vorteilhaft, da das Anhydrat bzw. das Hydrat immer in dem Behälter bleibt und ein Befüllen oder Entleeren des Innenraums des Behälters nicht notwendig ist. Da der Behälter mit dem Anhydrat und/oder dem Hydrat nur partiell gefüllt ist, kann sich das Anhydrat während des Heizbetriebs in das voluminösere Hydrat umwandeln, ohne den Behälter zu gefährden.

Vorzugsweise ist der semipermeable Wandbereich (WB1, WB2, WB) aus Metall gebildet. Da die semipermeablen Wandbereiche des Behälters aus Metall bestehen, können an ihnen sowohl Wasser bzw. Wasserdampf als auch Wärme gut transportiert werden.

Vorzugsweise ist der Innenraum des Behälters (K) von einem ersten semipermeablen Wandbereich (WB1) aus Metall und einem zweiten semipermeablen Wandbereich (WB2) aus Metall begrenzt, zwischen denen sich der Innenraum des Behälters (K) erstreckt. Dadurch sind alle Bereiche des Innenraums nahe an einem semipermeablen Wandbereich, wodurch für die Diffusion von Wassermolekülen im Heizbetrieb und im Ladebetrieb kurze Wege gegeben sind.

Vorzugsweise ist zumindest ein Teil der semipermeablen Wandbereiche (WB1, WB2, WB) aus Metallkeramik gebildet.

Vorzugsweise ist zumindest ein Teil der semipermeablen Wandbereiche (WB1, WB2, WB) aus Metall gebildet und hat eine Vielzahl von Durchgangs-Bohrungen (DB), die sich jeweils von der äusseren Wandfläche (WBa) des semipermeablen Wandbereichs (WB) bis zur inneren Wandfläche (WBi) des semipermeablen Wandbereichs (WB) erstrecken.

Vorzugsweise hat der Querschnitt der Durchgangs-Bohrungen (DB) jeweils eine Verengung (V). Aufgrund der Verengung wird der Austritt von Anhydrat-Partikeln oder von Hydrat-Partikeln aus dem Reaktionsraum erschwert, während beim Heizbetrieb Wasser und Wasserdampf an den Verengungen V leicht in den Reaktionsraum R hineingelangen kann und beim Ladebetrieb Wasser und Wasserdampf an den Verengungen V leicht aus dem Reaktionsraum R heraus gelangen kann.

Vorzugsweise hat der Behälter (K, K*) entlang einer Behälterachse (BA) einen konstanten Querschnitt quer zur Behälterachse (BA), wobei vorteilhaft vorgesehen ist, dass der Behälter (K, K*) entlang seiner Behälterachse (BA) beabstandet angeordnete impermeable Trennwände (TW) aufweist, welche für das Anhydrat, das Hydrat, Wasser und Wasserdampf undurchlässig sind und welche den Innenraum des Behälters (K) in entlang der Behälterachse (BA) angeordnete Teilkammern (TK) bzw. Teilvolumina (TV) unterteilen.

Vorzugsweise wird auch ein Behälter (K, K*) zur Verwendung bei dem erfindungsgemässen Verfahren bereitgestellt, wobei der Innenraum des Behälters (K, K*) mit einem Anhydrat und/oder einem Hydrat partiell gefüllt ist und der Behälter (K) einen semipermeablen Wandbereich (WB1, WB2) aufweist, welcher für das in ihm enthaltene Anhydrat oder Hydrat undurchlässig ist und für Wasser oder Wasserdampf durchlässig ist.

Vorzugsweise ist der semipermeable Wandbereich (WB1, WB2, WB) aus Metall gebildet; und/oder der Innenraum des Behälters (K) von einem ersten semipermeablen Wandbereich (WB1) aus Metall und einem zweiten semipermeablen Wandbereich (WB2) aus Metall begrenzt, zwischen denen sich der Innenraum des Behälters (K) erstreckt; und/oder zumindest ein Teil der semipermeablen Wandbereiche (WB1, WB2, WB) aus Metallkeramik gebildet.

Vorzugsweise ist zumindest ein Teil der semipermeablen Wandbereiche (WB1, WB2, WB) aus Metall gebildet und weist eine Vielzahl von Durchgangs-Bohrungen (DB) auf, die sich jeweils von der äusseren Wandfläche (WBa) des semipermeablen Wandbereichs (WB) bis zur inneren Wandfläche (WBi) des semipermeablen Wandbereichs (WB) erstrecken, wobei vorteilhaft vorgesehen ist, dass der Querschnitt der Durchgangs-Bohrungen (DB) eine Verengung (V) aufweist.

Vorzugsweise ist zumindest ein Teil der semipermeablen Wandbereiche (WB1, WB2, WB) aus einer dreidimensionalen Metallspan-Matrix (MSM) gebildet, in welcher Metallspäne (MS) mit einem anorganischen Klebemittel (WG) miteinander verbunden sind und welche zwischen den Metallspänen (MS) Hohlräume enthält; und/oder enthält der Innenraum des Behälters (K) eine Füllung, welche eine durch Salzhydrat gebildete erste Phase, die kontinuierlich und porös ist, und in der ersten Phase verteilte Partikel (MP) aus einem Material mit hoher spezifischer Wärmeleitfähigkeit als zweite Phase enthält; und/oder enthält der Innenraum des Behälters (K) eine Füllung, welche eine durch Salzhydrat gebildete erste Phase, die kontinuierlich und porös ist, und eine sich innerhalb der ersten Phase erstreckende Gitterstruktur (MG) aus einem Material mit hoher spezifischer Wärmeleitfähigkeit als zweite Phase enthält; und/oder enthält der Innenraum des Behälters (K) eine Füllung, in welcher Metallspäne (MS) mit einem anorganischen Klebemittel miteinander verbunden sind und eine dreidimensionale Metallspan-Matrix (MSM) bilden und in welcher Zwischenräume der Metallspan-Matrix mit Hydrat, d.h. der hydratisierten Form eines Salzhydrats, zumindest partiell gefüllt sind.

Vorzugsweise wird auch ein Behälter (K*) zur Verwendung bei dem erfindungsgemässen Verfahren bereitgestellt, wobei der Behälter (K*) ein poröses Gebilde ist, welches eine metallische Matrix aufweist und ein Salzhydrat aufweist, welches die Poren bzw. mikroskopischen Zwischenräume der metallischen Matrix im hydratisierten Zustand des Salzhydrats zumindest partiell ausfüllt und für Wasser oder Wasserdampf durchlässig ist.

Die Verwendung eines solchen Behälters ist vorteilhaft, da das Anhydrat bzw. das Hydrat immer in den Poren des Behälters bleibt und ein Befüllen oder Entleeren des Innenraums des Behälters nicht notwendig ist. Da die Poren des Behälters mit dem Anhydrat und/oder dem Hydrat nur partiell gefüllt sind, kann sich das Anhydrat während des Heizbetriebs in das voluminösere Hydrat umwandeln, ohne den Behälter zu gefährden.

Vorzugsweise enthält die metallische Matrix Metallpartikel (MP), welche durch Sintern zu einem Metall-Sinterblock bzw. einem Metall-Keramikblock miteinander verbunden sind und eine dreidimensionale Metallkeramik-Matrix (MKM) bilden; und/oder enthält die metallische Matrix Metallspäne (MS), welche mit einem anorganischen Klebemittel miteinander verbunden sind und eine dreidimensionale Metallspan-Matrix (MSM) bilden; und/oder sind in dem Salzhydrat verteilte Partikel (MP, GP) aus einem Material mit hoher spezifischer Wärmeleitfähigkeit enthalten; und/oder ist in dem Salzhydrat eine Gitterstruktur (MG, WR) mit hoher spezifischer Wärmeleitfähigkeit enthalten; und/oder hat das Salzhydrat eine poröse Struktur; und/oder enthält die metallische Matrix Aluminium; wobei vorteilhaft vorgesehen ist, dass das anorganische Klebemittel Wasserglas, insbesondere Natrium-Silikat und/oder Kalium-Silikat, enthält; und/oder sind in dem Salzhydrat Aluminium-Partikel und/oder Graphit-Partikel verteilt.

Vorzugsweise hat der Behälter (K, K*) entlang einer Behälterachse (BA) einen konstanten Querschnitt quer zur Behälterachse (BA), wobei vorteilhaft vorgesehen ist, dass der Behälter (K, K*) entlang seiner Behälterachse (BA) beabstandet angeordnete impermeable Trennwände (TW) aufweist, welche für das Anhydrat, das Hydrat, Wasser und Wasserdampf undurchlässig sind und welche den Innenraum des Behälters (K) in entlang der Behälterachse (BA) angeordnete Teilkammern (TK) bzw. Teilvolumina (TV) unterteilen.

Vorzugsweise hat der Querschnitt des Behälters (K, K*) die Form eines Rechtecks, eines Quadrats, eines Kreises oder eines Kreisrings, eines Dreiecks oder eines Sechsecks; oder die Form eines periodischen Musters, insbesondere einer Welle mit Sinusprofil oder Dreiecksprofil.

Vorzugsweise wird auch eine Behälter-Anordnung bereitgestellt, welche mehrere nebeneinander und parallel zueinander angeordnete Behälter (K) und/oder Behälter (K*) der weiter oben definierten Bauart aufweist.

Vorzugsweise wird auch ein Verfahren bereitgestellt zum Herstellen eines Behälters (K*) zur Verwendung bei dem erfindungsgemässem Verfahren zum Erzeugen oder Speichern von Wärme, wobei das Verfahren zum Herstellen des Behälters die folgenden Schritte aufweist:
a) Bilden einer dreidimensionalen metallischen Matrix, welche mikroskopische Zwischenräume aufweist; unds
b) Füllen der mikroskopischen Zwischenräume mit einer wässrigen Aufschlämmung eines Salzhydrats,

wobei vorteilhaft vorgesehen ist, dass Schritt a) durch Sintern metallischer Partikel;
und/oder durch Verkleben metallischer Partikel mittels eines anorganischen Klebemittels erfolgt,
wobei vorteilhaft vorgesehen ist, dass Schritt b) durch Hineinpressen der wässrigen Aufschlämmung in die mikroskopischen Zwischenräume erfolgt.

Vorzugsweise wird auch ein Verfahren bereitgestellt zum Herstellen eines Behälters (K*) zur Verwendung bei dem erfindungsgemässen Verfahren zum Erzeugen oder Speichern von Wärme, wobei das Verfahren zum Herstellen des Behälters die folgenden Schritte aufweist:
a) Bereitstellen einer wässrigen Aufschlämmung eines Salzhydrats, in welcher metallische Partikel suspendiert sind; und
b) Bilden einer dreidimensionalen metallischen Matrix durch Komprimieren der Aufschlämmung, wobei vorteilhaft vorgesehen ist, dass in Schritt b) ein Sintern der metallischen Partikel;
und/oder ein Verkleben der metallischen Partikel mittels eines anorganischen Klebemittels erfolgt.

Der Feststoff und/oder die erste Flüssigkeit einerseits und das Gas und/oder die zweite Flüssigkeit andererseits haben eine ausreichend hohe Affinität zueinander, dass bei der Reaktion eine grosse Menge Wärme abgegeben wird. Je nach Wahl des Feststoffs und/oder der ersten Flüssigkeit sind das Gas und/oder die zweite Flüssigkeit z.B. Ammoniak, Wasser, ein Alkohol, ein Keton, etc.

Vorzugsweise enthält der in dem Verfahren verwendete Feststoff und/oder die erste Flüssigkeit (1) ein Anhydrat, auch als kristallwasserfreies Salz bzw. dehydratisiertes Hydrat bezeichnet, wobei die Wärme durch Reaktion unter Beteiligung von Anhydrat einerseits und von Wasser und/oder Wasserdampf andererseits erzeugt wird. Dabei werden dem Reaktionsraum einerseits eine dosierte Menge des Anhydrats und andererseits eine dosierte Menge Wasser und/oder Wasserdampf zugeführt. Durch das dosierte Zuführen des Anhydrats und des Wassers und/oder Wasserdampfs kann die bei dem Verfahren frei werdende Wärmeleistung gesteuert werden.

Das Anhydrat bzw. dehydratisierte Hydrat kann in Form einer Flüssigkeit, z.B. als nichtwässrige Aufschlämmung bzw. Suspension dem Reaktionsraum zugeführt werden.

Zweckmässigerweise wird eine dosierte Menge des Anhydrats dem Reaktionsraum in Form von Feststoffpartikeln zugeführt.

Vorzugsweise wird eine dosierte Menge des Anhydrats dem Reaktionsraum in Form eines Pulvers zugeführt. Vorzugsweise haben die Partikel des Pulvers eine mittlere Korngrösse, die im Bereich von 100µm bis 800µm liegen.

Alternativ oder ergänzend kann die dosierte Menge des Anhydrats dem Reaktionsraum in Form von Pellets (Presslingen) zugeführt werden. Vorzugsweise haben die Pellets eine mittlere Grösse, die im Bereich von 3mm bis 15mm liegt.

Vorzugsweise enthalten die Pellets Partikel des Anhydrats, welche von einer Matrix aus Bindemittel zusammengehalten werden, wobei das Bindemittel wasserlöslich oder wasserunlöslich sein kann. Vorzugsweise beträgt der Bindemittelanteil in Gew.% der Pellets 1% bis 10%, vorzugsweise 2% bis 5%.

Beim Verwenden eines wasserlöslichen Bindemittels, das beim Herstellen der Pellets aus Anhydrat bzw. dehydratisiertem Hydrat verwendet wird, erfolgt zwangsweise eine Hydratation, auch Hydratisierung genannt, eines Teils des zu bindenden bzw. pelletisierenden Anhydrats. Wenn dieses Bindemittel in 1 Gew.% bis 10 Gew.% des Anhydrats in dem Pellet verwendet wird, erfolgt durch den Wasseranteil des Bindemittels eine Hydratation nur eines vernachlässigbaren Teils des Anhydrats in dem Pellet, so dass dessen Potential zur späteren Hydratation und Abgabe von Wärme nur minimal verringert wird. Vorteilhaft ist dabei, dass durch die während der Pelletherstellung durch Hydratation eines kleinen Anteils des Pelletmaterials freigesetzte Wärme ein an der teilweisen Hydratation des Pelletmaterials teilnehmender Anteil des Wassers in dem Bindemittel der Pellets verdampft, bevor er mit dem Anhydrat reagieren kann. Dadurch wird eine sehr schnelle Trocknung und Verfestigung des Bindemittels in den Pellets gewährleistet.

Für die Herstellung der Pellets kann auch ein Bindemittel verwendet werden, welches in Wasser und in einem anderen Lösungsmittel löslich ist. Vorzugsweise ist das andere Lösungsmittel eine Substanz, welche mit dem Anhydrat nicht reagiert. Es können z.B. niedermolekulare volatile organische Substanzen verwendet werden. Dies hat den Vorteil, dass man beim Herstellen der Pellets das andere Lösungsmittel, also kein Wasser, verwenden kann, wodurch das Pelletmaterial überhaupt nicht hydratisiert wird, so dass dessen Potential zur späteren Hydratation und Abgabe von Wärme nicht verringert wird.

Auch beim Verwenden eines wasserunlöslichen Bindemittels wird beim Herstellen der Pellets das Pelletmaterial nicht hydratisiert, so dass dessen Potential zur späteren Hydratation und Abgabe von Wärme nicht verringert wird. Um eine Verkapselung der Pellets mit wasserunlöslichem Bindemittel, d.h. eine Abschottung des Pelletmaterials von Wasser zu verhindern, wird vorzugsweise ein Bindemittelanteil in Gew.% der Pellets von 1% bis 2% verwendet.

Unabhängig von der Art des Bindemittels verwendet man vorzugsweise eine Pelletpresse für die Herstellung der Pellets aus Anhydrat.

Bei der Herstellung der Pellets mit einem Bindemittel, welches in Wasser und in einem anderen Lösungsmittel löslich ist und welches in dem anderen Lösungsmittel gelöst ist, kann auch ein Sprühverfahren oder ein Vertröpfelungsverfahren verwendet werden. Dabei wird die Suspension bzw. Aufschlämmung (slurry) aus Anhydrat, dem anderen Lösungsmittel und dem darin gelösten Bindemittel durch eine Düse befördert. Dies kann durch Schwerkraft, Trägheitskraft, z.B. Zentrifugalkraft, oder hydraulischen Druck erfolgen. Je nach Viskosität der Suspension bzw. Aufschlämmung (slurry) kann eine Vereinzelung des aus der Düse austretenden Strahls zu Pellets in der Atmosphäre einer Pellet-Auffangkammer nach der Düse erfolgen.

Vorzugsweise erzeugt man ein pulsierendes Druckgefälle im Fluidstrom der Suspension bzw. Aufschlämmung, um die Vereinzelung des Fluids zu Pellets zu begünstigen. Besonders bevorzugt ist die Verwendung eines Tropfturmes mit einer Düsenplatte im oberen Teil des Tropfturmes. Dabei wird die Suspension bzw. Aufschlämmung in eine erste Kammer oberhalb der Düsenplatte eingespeist, und die Düsenplatte wird vibriert, wobei die Vibration der Düsenplatte vorzugsweise parallel zur Schwerkraftrichtung erfolgt, d.h. abwechselnd auf und ab. Die an der Unterseite der vibrierenden Düsenplatte aus den Düsen austretenden Tropfen der Suspension bzw. Aufschlämmung fallen in die Atmosphäre einer zweiten Kammer unterhalb der Düsenplatte. Während des Fallens verflüchtigt sich das Lösungsmittel des Bindemittels, so dass am Boden der zweiten Kammer verfestigte Pellets ankommen.

Zweckmässigerweise wird eine dosierte Menge Wasser dem Reaktionsraum in Form von Tröpfchen oder als Aerosol zugeführt. Dies kann mittels eines Luftstroms erfolgen. Vorzugsweise liegt der mittlere Durchmesser eines Tröpfchens im Bereich von 100µm bis 2mm.

Alternativ oder ergänzend kann die dosierte Menge Wasser dem Reaktionsraum in Form eines Wasserstrahles zugeführt werden, dessen Querschnittsfläche vorzugsweise im Bereich von 0.2mm² bis 500mm² liegt und dessen Geschwindigkeit vorzugsweise im Bereich von 0.5m/s bis 10m/s liegt.

Gemäss einer bevorzugten Variante (Nassverfahren) ist die dosierte Menge Wasser bezüglich der dosierten Menge Anhydrat überstöchiometrisch, wobei der Wasserüberschuss bezogen auf die stöchiometrische Molmenge an Wasser vorzugsweise im Bereich von 2% bis 15% liegt und besonders bevorzugt im Bereich von 5% bis 10% liegt. Je nach der Ausprägung des Überschusses an Wasser ist das Reaktionsprodukt, in welchem die Wärme entsteht, mehr oder weniger feucht bis hin zu pastös. Die Viskosität des Wassers mit den darin dispergierten Feststoffpartikeln (Paste) ist grösser als die Viskosität des Wassers.

Gemäss einer weiteren bevorzugten Variante (Trockenverfahren) ist die dosierte Menge Wasser bezüglich der dosierten Menge Anhydrat unterstöchiometrisch, wobei der Wasserunterschuss bezogen auf die stöchiometrische Molmenge an Wasser vorzugsweise im Bereich von 2% bis 15% liegt und besonders bevorzugt im Bereich von 5% bis 10% liegt. Je nach der Ausprägung des Unterschusses an Wasser ist das Reaktionsprodukt, in welchem die Wärme entsteht, mehr oder weniger trocken und mehr oder weniger rieselfähig. Die Rieselfähigkeit des trockenen Reaktionsproduktes ist meistens sehr gut. Der Überschuss des Anhydrats in dem trockenen Reaktionsproduktwirkt als Trockenmittel und beugt einem ungewollten Feuchtwerden vor.

Das Verfahren kann kontinuierlich erfolgen.

Vorzugsweise werden dabei a1) die dosierte Menge des Feststoffs und/oder der ersten Flüssigkeit (1) dem Reaktionsraum (R) kontinuierlich zugeführt und a2) die dosierte Menge des Gases und/oder der zweiten Flüssigkeit (2) dem Reaktionsraum (R) kontinuierlich zugeführt.

Alternativ kann das Verfahren zumindest teilweise diskontinuierlich erfolgen.

Bei einer ersten Variante werden a1) vorab in einem ersten Schritt eine dosierte kumulierte Menge des Feststoffs und/oder der ersten Flüssigkeit (1) dem Reaktionsraum (R) während eines Zeitraums zugeführt und a2) danach in einem zweiten Schritt eine dosierte Menge des Gases und/oder der zweiten Flüssigkeit (2) dem Reaktionsraum (R) kontinuierlich zugeführt.

Bei einer zweiten Variante werden a2) vorab in einem ersten Schritt eine dosierte kumulierte Menge des Gases und/oder der zweiten Flüssigkeit (2) dem Reaktionsraum (R) zugeführt und a1) danach in einem zweiten Schritt eine dosierte Menge des Feststoffs und/oder der ersten Flüssigkeit (1) dem Reaktionsraum (R) zugeführt, wobei das das Zuführen bei a1) vorzugsweise kontinuierlich erfolgt.

In einer besonders bevorzugten Ausführung ist der Reaktionsraum ein Behälter, insbesondere eine Kartusche, Patrone, Platte, etc. Diese Kartusche kann als Heizkartusche HK in einem Heizbetrieb zum Abgeben von Wärme verwendet werden. Vorzugsweise ist die Kartusche eine wärmeleitenden Kartusche, in welcher vorzugsweise ein Salzhydrat als Anhydrat (in dehydratisiertem Zustand) eingeschlossen ist. Vorzugsweise ist die Kartusche zumindest in einem Teilbereich für Wasser oder Wasserdampf durchlässig.

Es kann eine Vorrichtung zur Durchführung des weiter oben beschriebenen Verfahrens bereitgestellt werden, wobei die Vorrichtung eine den Reaktionsraum (R) bildende Reaktionskammer mit einem Mittel (WT) zum Abführen von Reaktionswärme sowie ein erstes Zufuhrmittel (SF; ZF) zum dosierten Zuführen eines Feststoffs und/oder einer ersten Flüssigkeit (1) in die Reaktionskammer (R) und ein zweites Zufuhrmittel (DP, ZD) zum dosierten Zuführen eines Gases und/oder einer zweiten Flüssigkeit (2) in die Reaktionskammer (R) aufweist.

Zweckmässigerweise enthält das Mittel zum Abführen von Reaktionswärme einen Wasser/Reaktionsmedium-Wärmetauscher (WT) oder einen Luft/Reaktionsmedium-Wärmetauscher.

Vorzugsweise enthält das erste Zufuhrmittel einen Schneckenförderer (SF).

Besonders vorteilhaft ist es, wenn der Schneckenförderer ein Doppelschneckenförderer mit zwei kämmenden, sich im Betrieb gegenseitig reinigenden Schneckenwellen ist, welche vorzugsweise ein Erdmenger-Profil aufweisen.

Als Schneckenförderer kann auch ein Mehrschneckenförderer mit mehreren kämmenden Schneckenwellen verwendet werden, wovon sich jeweils zwei benachbarte Schneckenwellen im Betrieb gegenseitig reinigen, wobei die Schneckenwellen vorzugsweise ein Erdmenger-Profil aufweisen.

Alternativ oder ergänzend kann das erste Zufuhrmittel einen Zahnriemenförderer (ZF) enthalten.

Vorzugsweise ist der Zahnriemenförderer aus einem Polymermaterial gebildet und besonders bevorzugt aus einem faserverstärkten Polymermaterial gebildet.

Vorzugsweise hat der Zahnriemenförderer entlang seiner Längsausdehnung bzw. entlang seiner Länge voneinander beabstandete Vertiefungen, die sich über die gesamte Querausdehnung bzw. über die gesamte Breite des Zahnriemenförderers erstrecken.

Vorzugsweise haben die Vertiefungen ein konstantes Profil entlang der Querausdehnung bzw. über die gesamte Breite des Zahnriemenförderers. Besonders vorteilhaft ist es, wenn das Profil ein V-Profil oder ein U-Profil ist.

Vorzugsweise enthält das zweite Zufuhrmittel eine Dosierpumpe (DP) und/oder eine Düse, insbesondere eine Zerstäubungsdüse (ZD).

Vorzugsweise hat die Zerstäubungsdüse einen Düsenblock mit mehreren nebeneinander angeordneten Düsenöffnungen.

Alternativ oder ergänzend kann das zweite Zufuhrmittel einen Zufuhrkanal (Pumpe/Schwerkraft) (ZK) enthalten.

Besonders vorteilhaft ist es, wenn bei der Vorrichtung der Reaktionsraum (R) einen Behälter aufweist mit einer Füllöffnung zum Zuführen des Feststoffs und/oder der ersten Flüssigkeit (1) in den Behälter, einem Verschluss zum Schliessen der Füllöffnung und einem semipermeablem Wandbereich, welcher für den Feststoff und/oder die erste Flüssigkeit (1) undurchlässig und für das Gas und/oder die zweite Flüssigkeit (2) durchlässig ist.

Alternativ kann bei der Vorrichtung der Reaktionsraum (R) einen Behälter aufweisen mit einer Füllöffnung zum Zuführen des Gases und/oder der zweiten Flüssigkeit (2) in den Behälter und zum Zuführen des Feststoffs und/oder der ersten Flüssigkeit (1) in den Behälter.

Vorzugsweise enthält der semipermeable Wandbereich eine Wand mit einer Vielzahl von Löchern.

Die Löcher der Wand können Rundlöcher oder Längslöcher oder Kreuzlöcher oder Sternlöcher sein.

Vorzugsweise liegt die kleinste Abmessung der Löcher, d.h. der Durchmesser der Rundlöcher oder die Breite der Längslöcher, im Bereich von 50µm bis 1000µm, vorzugsweise im Bereich von 50µm bis 500µm und am bevorzugtesten im Bereich von 50µm bis 200µm liegt.

Vorzugsweise hat bei der Vorrichtung der Reaktionsraum (R) einen Behälter mit einer Füllöffnung zum Zuführen des Gases und/oder der zweiten Flüssigkeit (2) in den Behälter und zum Zuführen des Feststoffs und/oder der ersten Flüssigkeit (1) in den Behälter.

Bei einer besonders bevorzugten Ausführung ist der Behälter eine Heizkartusche HK, welche mit einer Heizzentrale oder mehreren dezentralen Heizvorrichtungen jeweils in thermischen Kontakt gebracht werden kann. Insbesondere kann die Heizkartusche formschlüssig und in thermischem Kontakt in eine zur Kartusche komplementäre Aussparung einer Heizzentrale oder einer dezentralen Heizvorrichtung eingeführt und aus dieser herausgeführt werden. Vorzugsweise wird der Formschluss und der thermische Kontakt mittels einer Schraubverbindung oder einer Bajonettverbindung hergestellt.

Vorzugsweise enthält die Heizkartusche einen ersten Wandbereich, welcher der oben erwähnte semipermeable Wandbereich mit der Vielzahl von Löchern ist, insbesondere mit den Rundlöchern oder Längslöchern oder Kreuzlöchern oder Sternlöchern. Dieser semipermeable erste Wandbereich kann aus Metall oder aus Keramik, z.B. aus Metallkeramik oder aus Oxidkeramik, oder aus einer Kombination von Metall und Keramik nach der Art eines Keramikfilters gebildet sein.

Vorzugsweise enthält die Heizkartusche einen zweiten Wandbereich, welcher aus einem stark wärmeleitenden Material, vorzugsweise aus Metall, z.B. Kupfer, Aluminium, Stahl, etc., oder Graphit gebildet ist.

Vorzugsweise enthält die Heizkartusche eine Reaktionskammer zwischen dem ersten Wandbereich und dem zweiten Wandbereich. Diese Reaktionskammer ist mit dem Anhydrat gefüllt. Vorzugsweise ist die Reaktionskammer mit Anhydrat in Form eines Feststoffes gefüllt. Vorzugsweise ist die Reaktionskammer mit dem Anhydrat nur teilweise gefüllt. Einerseits verhindert der erste Wandbereich, dass die Feststoffpartikel des Anhydrats aus der Reaktionskammer austreten können. Andererseits ermöglicht der erste Wandbereich, dass Wasser als Flüssigkeit oder als Gas/Dampf in die Reaktionskammer eintreten kann.

Im Heizbetrieb wird der Reaktionskammer der Heizkartusche durch den ersten Wandbereich hindurch als Flüssigkeit oder als Dampf vorliegendes Wasser dosiert zugeführt, welches mit dem Anhydrat exotherm reagiert. Die freigesetzte Hydratationswärme wird durch den zweiten Wandbereich hindurch aus der Kartusche abgeleitet.

Gemäss einer ersten bevorzugten Ausführung der Heizkartusche weisen der erste Wandbereich und der zweite Wandbereich der Heizkartusche jeweils ebene Bereiche auf, die parallel zueinander beabstandet angeordnet sind, wobei der Zwischenraum zwischen den voneinander beabstandeten ebenen Bereichen Anhydrat enthält. Diese Ausführung der Heizkartusche nennen wir hier «Anhydrat-Plattenkartusche».

Gemäss einer zweiten bevorzugten Ausführung der Heizkartusche weisen der erste Wandbereich und der zweite Wandbereich der Heizkartusche jeweils Bereiche in Form eines Zylindermantels auf, die konzentrisch zueinander beabstandet angeordnet sind, wobei der Zwischenraum zwischen den voneinander beabstandeten konzentrischen Bereichen Anhydrat enthält. Diese Ausführung der Heizkartusche nennen wir hier «Anhydrat-Hohlzylinderkartusche».

Vorzugsweise werden mehrere Heizkartuschen fluidtechnisch parallel geschaltet angeordnet, wobei der zweite Wandbereich von einem Wärmeträgerfluid eines Heizsystems kontaktiert wird.

Gemäss einer bevorzugten Verwendung der Heizkartuschen zum Heizen werden eine einzige davon oder mehrere in einen Wassertank eingetaucht. Dadurch kann flüssiges Wasser über den ersten, semipermeablen Wandbereich dosiert in die Reaktionskammer der Heizkartusche eindringen. Die in der Reaktionskammer dosiert freigesetze Hydratationswärme wird über den zweiten, stark wärmeleitenden Wandbereich in das Wasser des Wassertanks geleitet, wodurch dessen Temperatur dosiert ansteigt.

Zur Dosierung der Wärmeleistung der durch eine Heizkartusche mit vorgegebener Kartuschen-Geometrie in den Wassertank eingetragenen Wärme können folgende Parameter einzeln oder in Kombination verwendet werden:
- Eintauchtiefe der partiell in das Wasser des Wassertanks eingetauchten Kartusche(n)
- Absenkgeschwindigkeit der partiell in das Wasser des Wassertanks eingetauchten Kartuschen(n)
- Druck im Innern des Wassertanks bzw. Wasserdruck.

Der Feststoff und/oder die erste Flüssigkeit einerseits und das Gas und/oder die zweite Flüssigkeit andererseits haben eine ausreichend hohe Affinität zueinander, dass bei der Reaktion eine grosse Menge Wärme zugeführt wird. Je nach Wahl des Feststoffs und/oder der ersten Flüssigkeit sind das Gas und/oder die zweite Flüssigkeit z.B. Ammoniak, Wasser, ein Alkohol, ein Keton, etc.

Vorzugsweise enthält der in dem Verfahren verwendete Feststoff und/oder die erste Flüssigkeit (1) ein Hydrat, auch als kristallwasserhaltiges Salz bzw. hydratisiertes Anydrat bezeichnet, wobei die Wärme durch Reaktion unter Beteiligung von Hydrat einerseits und von Wasser und/oder Wasserdampf andererseits gespeichert wird. Dabei werden dem Reaktionsraum einerseits eine dosierte Menge des Hydrats und andererseits eine dosierte Menge Wärme zugeführt. Durch das dosierte Zuführen des Hydrats und der Wärme kann die bei dem Verfahren zugeführte Wärmeleistung gesteuert werden.

Zweckmässigerweise wird eine dosierte Menge des Hydrats dem Reaktionsraum in Form von Feststoffpartikeln zugeführt.

Vorzugsweise wird eine dosierte Menge des Hydrats dem Reaktionsraum in Form eines Pulvers zugeführt.

Alternativ oder ergänzend kann die dosierte Menge des Hydrats dem Reaktionsraum in Form von Pellets (Presslingen) zugeführt werden.

Zweckmässigerweise wird die dosierte Menge Wärme dem Reaktionsraum in Form von heisser Luft zugeführt.

Vorzugsweise wird die dosierte Menge Wärme dem Reaktionsraum mittels eines Wirbelbetts zugeführt.

Gemäss einer bevorzugten Variante (Trockenverfahren) ist die dosierte Menge Wärme bezüglich der dosierten Menge Hydrat überstöchiometrisch. Je nach der Ausprägung des Überschusses an Wärme ist das Reaktionsprodukt, in welchem die Wärme gespeichert ist, mehr oder weniger trocken und mehr oder weniger rieselfähig. Die Rieselfähigkeit des trockenen Reaktionsproduktes ist meistens sehr gut. Der Überschuss an Wärme in dem trockenen Reaktionsprodukt beseitigt nicht-gebundenes Restwasser und erhöht kurzzeitig bis zum Abkühlen die Temperatur des Reaktionsproduktes.

Gemäss einer weiteren bevorzugten Variante (Nassverfahren) ist die dosierte Menge Wärme bezüglich der dosierten Menge Hydrat unterstöchiometrisch. Je nach der Ausprägung des Unterschusses an Wärme ist das Reaktionsprodukt, in welchem die Wärme gespeichert ist, mehr oder weniger feucht bis hin zu pastös.

Das Verfahren kann kontinuierlich erfolgen.

Vorzugsweise werden dabei b1) die dosierte Menge des Feststoffs und/oder der ersten Flüssigkeit (1) dem Reaktionsraum (R) kontinuierlich zugeführt und b2) die dosierte Menge Wärme (W) dem Reaktionsraum (R) kontinuierlich zugeführt.

Alternativ kann das Verfahren zumindest teilweise diskontinuierlich erfolgen.

Bei einer ersten Variante werden b1) vorab in einem ersten Schritt eine dosierte kumulierte Menge des Feststoffs und/oder der ersten Flüssigkeit (1) dem Reaktionsraum (R) während eines Zeitraums zugeführt wird und b2) danach in einem zweiten Schritt eine dosierte Menge Wärme (W) dem Reaktionsraum (R) kontinuierlich zugeführt.

Bei einer zweiten Variante werden b2) vorab in einem ersten Schritt eine dosierte kumulierte Menge Wärme (W) dem Reaktionsraum (R) zugeführt b1) danach in einem zweiten Schritt eine dosierte Menge des Feststoffs und/oder der ersten Flüssigkeit (1) dem Reaktionsraum (R) zugeführt, wobei das Zuführen bei b1) vorzugsweise kontinuierlich erfolgt.

In einer besonders bevorzugten Ausführung ist der Reaktionsraum ein Behälter, insbesondere eine Kartusche, Patrone, Platte, etc. Diese Kartusche kann als Ladekartusche LK in einem Ladebetrieb zum Speichern von Wärme verwendet werden. Vorzugsweise ist die Kartusche eine wärmeleitenden Kartusche, in welcher vorzugsweise ein Salzhydrat als Hydrat (in hydratisiertem Zustand) eingeschlossen ist. Vorzugsweise ist die Kartusche zumindest in einem Teilbereich für Wasser oder Wasserdampf durchlässig.

Es kann zur Durchführung des weiter oben beschriebenen Verfahrens eine Vorrichtung bereitgestellt werden, wobei die Vorrichtung eine den Reaktionsraum bildende Reaktionskammer mit einem Mittel (WT; WB) zum Zuführen von Reaktionswärme sowie ein erstes Mittel (SF; ZF) zum dosierten Zuführen eines Feststoffs oder einer ersten Flüssigkeit in die Reaktionskammer (R) aufweist und ein zweites Mittel (V; P) zum dosierten Abführen eines Gases oder einer zweiten Flüssigkeit (2) aus der Reaktionskammer (R) aufweist.

Zweckmässigerweise enthält das Mittel zum Zuführen von Reaktionswärme einen Wärmetauscher (WT).

Vorzugsweise enthält das Mittel zum Zuführen von Reaktionswärme ein Wirbelbett (WB).

Vorzugsweise enthält das erste Mittel einen Schneckenförderer (SF).

Alternativ oder ergänzend enthält das erste Mittel einen Zahnriemenförderer (ZF).

Vorzugsweise enthält das Mittel zum Zuführen von Reaktionswärme ein Gebläse (V).

Alternativ oder ergänzend enthält das Mittel zum Zuführen von Reaktionswärme eine Pumpe (P).

Besonders vorteilhaft ist es, wenn bei der Vorrichtung der Reaktionsraum (R) einen Behälter aufweist mit einer Füllöffnung zum Zuführen des Feststoffs und/oder der ersten Flüssigkeit (1) in den Behälter, einem Verschluss zum Schliessen der Füllöffnung und einem semipermeablem Wandbereich, welcher für den Feststoff und/oder die erste Flüssigkeit (1) undurchlässig und für das Gas und/oder die zweite Flüssigkeit (2) durchlässig ist.

Alternativ kann bei der Vorrichtung der Reaktionsraum (R) einen Behälter aufweisen mit einer Füllöffnung und/oder einem Wärmeeinleitungsbereich zum Zuführen der dosierten kumulierten Menge Wärme (W) und der dosierten Menge Feststoff und/oder der ersten Flüssigkeit (1) in den Behälter, einem Verschluss zum Schliessen der Füllöffnung und einem semipermeablem Wandbereich, welcher für den Feststoff und/oder die erste Flüssigkeit (1) undurchlässig und für das Gas und/oder die zweite Flüssigkeit (2) durchlässig ist.

Bei einer besonders bevorzugten Ausführung ist der Behälter eine Ladekartusche LK, welche mit einer Wärmequelle in thermischen Kontakt gebracht werden kann. Insbesondere kann die Ladekartusche formschlüssig und in thermischem Kontakt in eine zur Kartusche komplementäre Aussparung einer Wärmequelle eingeführt und aus dieser herausgeführt werden. Vorzugsweise wird der Formschluss und der thermische Kontakt mittels einer Schraubverbindung oder einer Bajonettverbindung hergestellt.

Vorzugsweise enthält die Ladekartusche einen ersten Wandbereich, welcher der oben erwähnte semipermeable Wandbereich mit der Vielzahl von Löchern ist, insbesondere mit den Rundlöchern oder Längslöchern oder Kreuzlöchern oder Sternlöchern. Dieser semipermeable erste Wandbereich kann aus Metall oder aus Keramik, z.B. aus Metallkeramik oder aus Oxidkeramik, oder aus einer Kombination von Metall und Keramik nach der Art eines Keramikfilters gebildet sein.

Vorzugsweise enthält die Ladekartusche einen zweiten Wandbereich, welcher aus einem stark wärmeleitenden Material, vorzugsweise aus Metall, z.B. Kupfer, Aluminium, Stahl, etc., oder Graphit gebildet ist.

Vorzugsweise enthält die Ladekartusche eine Reaktionskammer zwischen dem ersten Wandbereich und dem zweiten Wandbereich. Diese Reaktionskammer ist mit dem Hydrat gefüllt. Vorzugsweise ist die Reaktionskammer mit Hydrat in Form eines Feststoffes gefüllt. Vorzugsweise ist die Reaktionskammer mit dem Hydrat nur teilweise gefüllt, insbesondere mit einem Füllgrad in Vol.% von 90% bis 100%, insbesondere von 95% bis 100%. Einerseits verhindert der erste Wandbereich, dass die Feststoffpartikel des Hydrats aus der Reaktionskammer austreten können. Andererseits ermöglicht der erste Wandbereich, dass Wasser als Flüssigkeit oder als Gas/Dampf aus der Reaktionskammer austreten kann.

Im Ladebetrieb wird der Reaktionskammer der Ladekartusche durch den zweiten Wandbereich und auch in einem geringeren Anteil durch den ersten Wandbereich hindurch Wärme dosiert zugeführt, welche mit dem Hydrat endotherm reagiert. Das freigesetzte Hydratationswasser bzw. Kristallwasser wird durch den ersten Wandbereich hindurch aus der Kartusche abgeleitet, und zwar je nach Reaktionsbedingungen in Form von flüssigem Wasser und/oder als Wasserdampf.

Gemäss einer ersten bevorzugten Ausführung der Ladekartusche weisen der erste Wandbereich und der zweite Wandbereich der Ladekartusche jeweils ebene Bereiche auf, die parallel zueinander beabstandet angeordnet sind, wobei der Zwischenraum zwischen den voneinander beabstandeten ebenen Bereichen Hydrat enthält. Diese Ausführung der Ladekartusche nennen wir hier «Hydrat-Plattenkartusche».

Gemäss einer zweiten bevorzugten Ausführung der Ladekartusche weisen der erste Wandbereich und der zweite Wandbereich der Ladekartusche jeweils Bereiche in Form eines Zylindermantels auf, die konzentrisch zueinander beabstandet angeordnet sind, wobei der Zwischenraum zwischen den voneinander beabstandeten konzentrischen Bereichen Hydrat enthält. Diese Ausführung der Ladekartusche nennen wir hier «Hydrat-Hohlzylinderkartusche».

Vorzugsweise werden mehrere Ladekartuschen fluidtechnisch parallel geschaltet angeordnet, wobei der zweite Wandbereich unmittelbar von einer Wärmequelle thermisch kontaktiert wird oder mittelbar über ein Wärmeträgerfluid von der Wärmequelle kontaktiert wird.

Gemäss einer ersten bevorzugten Verwendung der Ladekartuschen zum Laden mit Wärmeenergie werden eine einzige davon oder mehrere in einer solarthermischen Anlage positioniert. Vorzugsweise erfolgt die Positionierung in einer solarthermischen Anlage, in welcher grossflächig eingefangene Sonnenstrahlung auf einen kleinen Bereich konzentriert wird, um in diesem Bereich Wärme mit Temperaturen zu erzeugen, welche ausreichend hoch sind, um eine rasche und vollständige Dehydratation des Hydrats zu Anhydrat zu bewirken. Dadurch kann gasförmiges Wasser bzw. Wasserdampf über den ersten, semipermeablen Wandbereich dosiert aus der Reaktionskammer der Ladekartusche austreten. Die in der Reaktionskammer dosiert oder nicht-dosiert aufgenommene Dehydratationswärme wird über den zweiten, stark wärmeleitenden Wandbereich in die Reaktionskammer der Ladekartusche geleitet, wodurch deren Temperatur dosiert oder nicht-dosiert auf einen ausreichend hohen Wert angehoben wird, um eine vollständige Dehydratation des Hydrats zu erzielen.

Vorzugsweise werden die Ladekartuschen in einem Parabolrinnen-Solarkraftwerk mit Wärmeenergie geladen. Dabei werden die Ladekartuschen mit einem Wärmeträgermedium, z.B. Öl, in thermischen Kontakt gebracht, welches in einem in der Brennlinie der Parabolrinnen verlaufenden Kanal, z.B. Rohr, strömt, um auf Temperaturen von mehreren 100°C, insbesondere auf Temperaturen über 300°C erhitzt zu werden.

Gemäss einem besonders bevorzugten Verfahren zum Laden der Ladekartusche mit Wärmeenergie wird in dem Parabolrinnen-Solarkraftwerk je nach Bedarf die eingefangene konzentrierte Solarenergie zur Erzeugung von Heissdampf wie z.B. Wasserdampf zum Antrieb einer Dampfmaschine wie z.B. einer Dampfturbine verwendet, um einen elektrischen Generator zur Erzeugung elektrischer Energie anzutreiben, und/oder die eingefangene konzentrierte Solarenergie wird zum Laden der Ladekartusche verwendet. Dadurch kann in Perioden von Spitzenleistungen eines Parabolrinnen-Solarkraftwerks, z.B. bei starker Sonneneinstrahlung im Sommer, der Überschuss an eingefangener Solarenergie in Form eines Anhydrats in einer Anhydrat-Heizkartusche gespeichert werden.

Gemäss einer zweiten bevorzugten Verwendung der Ladekartuschen zum Laden mit Wärmeenergie werden eine einzige davon oder mehrere in oder an einem Kraftwerk positioniert, welches während seines Betriebs einen erheblichen Anteil an Abwärme erzeugt. Vorzugsweise erfolgt die Positionierung in dem Kraftwerk in einem Bereich, wo herkömmlicherweise die Abwärme abgeführt wird, um in diesem Bereich Wärme mit Temperaturen zu erzeugen, welche ausreichend hoch sind, um eine rasche und vollständige Dehydratation des Hydrats zu Anhydrat zu bewirken. Dadurch kann gasförmiges Wasser bzw. Wasserdampf über den ersten, semipermeablen Wandbereich dosiert aus der Reaktionskammer der Ladekartusche austreten. Die in der Reaktionskammer dosiert oder nicht-dosiert aufgenommene Dehydratationswärme wird über den zweiten, stark wärmeleitenden Wandbereich in die Reaktionskammer der Ladekartusche geleitet, wodurch deren Temperatur dosiert oder nicht-dosiert auf einen ausreichend hohen Wert angehoben wird, um eine vollständige Dehydratation des Hydrats zu erzielen.

Als Kraftwerke in diesem Sinne werden hier thermische Grosskraftwerke verstanden, wie z.B. Kernkraftwerke und Verbrennungskraftwerke, in welchen fossile chemische Energieträger oder regenerativ erzeugte chemische Energieträger verbrannt werden, um auf direktem oder indirektem Wege elektrische Energie zu erzeugen, wobei aber stets ein mehr oder weniger grosser Anteil an Abwärme entsteht.

Als Kraftwerke in diesem Sinne werden hier auch stationäre und mobile Anlagen zur Kraft/Wärme-Kopplung bzw. Kogeneration verstanden, wie z.B. Verbrennungsmotoren (Ottomotor oder Dieselmotor), Strahltriebwerke oder Brennstoffzellen, in welchen fossile chemische Energieträger oder regenerativ erzeugte chemische Energieträger verbrannt werden, um auf direktem oder indirektem Wege elektrische Energie oder mechanische Energie zu erzeugen, wobei aber stets ein mehr oder weniger grosser Anteil an Abwärme entsteht.

An dieser Stelle sei noch erwähnt, dass die hier beschriebenen Verfahren und Vorrichtungen besonders gut zur Verwendung mit Hydrat/Anhydrat-Systemen geeignet sind. Ein besonders bevorzugtes System ist CaO/Ca(OH)₂
Besonders erwähnenswert ist dabei, dass das bevorzugte CaO/Ca(OH)₂-System allein mit nachhaltig verfügbaren Energiequellen energietechnisch betrieben werden kann.

Das gilt zunächst einmal für die einmalige Herstellung von CaO aus CaCO₃, bei welcher aus CaCO₃ bei Temperaturen über 900°C gasförmiges CO₂ ausgetrieben und CaO-Feststoff (gebrannter Kalk) erhalten wird. Dies kann in einem herkömmlichen Kalzinierungsofen (Kalkofen) unter Verwendung nachhaltig erzeugter chemischer Energieträger erfolgen. Dies kann aber auch mittels eines Solarkraftwerks erfolgen, in welchem die Solarenergie mittels einer Vielzahl von Spiegeln auf einen kleinen Bereich stark konzentriert wird, in welchem Temperaturen über 1000°C erreicht werden können.

Um in dem Anhydrat CaO gespeicherte chemische Energie in Wärme umzuwandeln, lässt man das CaO unter Verwendung der weiter oben beschriebenen Verfahren und Vorrichtungen mit Wasser reagieren, wodurch das Hydrat Ca(OH)₂ entsteht.

Um wieder Wärme zu speichern, wird dem Hydrat Ca(OH)₂ Wärme mit Temperaturen über 400°C zugeführt, wodurch gasförmiges Wasser ausgetrieben wird. Auch die wiederholte Herstellung des Anhydrats CaO aus dem Hydrat Ca(OH)₂ kann mittels eines Solarkraftwerks erfolgen, in welchem die Solarenergie auf einen kleinen Bereich stark konzentriert wird, in welchem Temperaturen über 400°C erreicht werden können. Hierfür eignet sich insbesondere ein Parabolrinnen-Solarkraftwerk.

Und wenn man das Anhydrat CaO nicht mehr benötigt, kann man es problemlos entsorgen, indem man es in der Atmosphäre der Erde aussetzt, welche H₂O und CO₂ enthält, mit denen das CaO nach und nach wieder zu CaCO₃ reagiert, wodurch der Carbonat-Zyklus wieder geschlossen ist.

Ein weiteres bevorzugtes System ist K₂CO₃ / K₂CO₃-H₂O.

Ausserdem sei noch erwähnt, dass die Anhydrat enthaltende Heizkartusche und die Hydrat enthaltende Ladekartusche unterschiedlich gestaltet sein können. In diesem Fall ist die Anhydrat enthaltende Heizkartusche für das Verfahren und die Vorrichtung zum Erzeugen (Abgeben, Freisetzen) von Wärme optimiert, und die Hydrat enthaltende Ladekartusche ist für das Verfahren und die Vorrichtung zum Speichern von Wärme optimiert.

Besonders vorteilhaft ist es, wenn die Anhydrat enthaltende Heizkartusche und die Hydrat enthaltende Ladekartusche die gleiche Gestalt haben. Dann erübrigt sich eine Entnahme des Hydrats der verbrauchten Kartusche nach einem abgeschlossenen Heizvorgang und ein Wiederbefüllen der Kartusche mit Anhydrat vor dem nächsten Heizvorgang.

Vorzugsweise ist zumindest ein Teil der semipermeablen Wandbereiche (WB1, WB2, WB) aus einer dreidimensionalen Metallspan-Matrix (MSM) gebildet, in welcher Metallspäne (MS) mit einem anorganischen Klebemittel (WG) miteinander verbunden sind und welche zwischen den Metallspänen (MS) Hohlräume aufweist. Diese Struktur wirkt ähnlich wie die weiter oben erwähnten gesinterten Strukturen einer Metallkeramik. Die dreidimensionale Metallspan-Matrix hat eine Siebfunktion. Sie lässt pulverförmiges oder körniges Salzhydrat nicht hindurchtreten, während Wasser oder Wasserdampf beim Laden oder Entladen entsprechend einem Druckgradienten oder Konzentrationsgradienten in der einen oder anderen Richtung durch den so gebildeten semipermeablen Wandbereich hindurchtreten können. Gleichzeitig sorgt die Metallspan-Matrix für eine gute Wärmeleitfähigkeit, so dass Wärme beim Laden oder Entladen entsprechend einem Temperaturgradienten in der einen oder anderen Richtung durch den so gebildeten semipermeablen Wandbereich hindurchtreten kann.

Vorzugsweise sind in der Metallspan-Matrix mindestens 90% der Metallspäne jeweils mit mindestens zwei weiteren Metallspänen verklebt, woduch eine dreidimensionale Struktur mit hoher resultierender Wärmeleitfähigkeit gebildet wird. Vorzugsweise haben die Metallspäne eine mittlere Länge im Bereich von 1mm bis 10mm.

Vorzugsweise werden als Metallspäne Aluminiumspäne verwendet. Vorzugsweise wird als anorganisches Klebemittel Wasserglas, d.h. Natrium-Silikat und/oder Kalium-Silikat verwendet. In einem ersten Schritt wird dabei ein fliessfähiges feuchtes Gemisch aus Aluminiumspänen und Wasserglas in die gewünschte geometrische Form (z.B. Plattenform, Wellplattenform) gebracht und komprimiert. In einem zweiten Schritt wird die so erhaltene geometrische Form bei Temperaturen im Bereich von 200°C bis 700°C getrocknet. Das als Klebemittel verwendete Wasserglas kann Aluminumpulver und/oder Graphitpartikel enthalten. Die Graphitpartikel enthalten vorzugsweise expandierten Graphit bzw. Blähgraphit.

Vorzugsweise weist der Innenraum des Behälters (K) eine Füllung auf, welche eine durch Salzhydrat gebildete erste Phase, die kontinuierlich und porös ist, und in der ersten Phase verteilte Partikel (MP) aus einem Material mit hoher spezifischer Wärmeleitfähigkeit als zweite Phase enthält. Die durch die verteilten Partikel gebildete zweite Phase sorgt für eine gute Wärmeleitfähigkeit, so dass Wärme beim Laden oder Entladen entsprechend einem Temperaturgradienten in der einen oder anderen Richtung innerhalb der so gebildeten Füllung des Behälters (K) gut fliessen kann.

Vorzugsweise werden als verteilte Partikel Aluminiumspäne, Aluminiumpulver, Graphitpulver oder expandierter Graphit, d.h. Blähgraphit verwendet.

Vorzugsweise weist der Innenraum des Behälters (K) eine Füllung auf, welche eine durch Salzhydrat gebildete erste Phase, die kontinuierlich und porös ist, und eine sich innerhalb der ersten Phase erstreckende Gitterstruktur (MG) aus einem Material mit hoher spezifischer Wärmeleitfähigkeit als zweite Phase enthält. Die durch die Gitterstruktur gebildete zweite Phase sorgt für eine gute Wärmeleitfähigkeit, so dass Wärme beim Laden oder Entladen entsprechend einem Temperaturgradienten in der einen oder anderen Richtung innerhalb der so gebildeten Füllung des Behälters (K) gut fliessen kann.

Vorzugsweise wird für die Gitterstruktur Aluminium oder Kupfer oder Eisen bzw. Stahl verwendet. Vorzugsweise haben die länglichen Elemente bzw. stabartigen Elemente der Gitterstruktur einen Durchmesser im Bereich von 0.5mm bis 3mm. Vorzugsweise beträgt ein Abstand benachbarter Gitterelemente in der Gitterstruktur zwischen 5mm und 50mm.

Vorzugsweise weist der Innenraum des Behälters (K) eine Füllung auf, in welcher Metallspäne (MS) mit einem anorganischen Klebemittel miteinander verbunden sind und eine dreidimensionale Metallspan-Matrix (MSM) bilden und in welcher Zwischenräume der Metallspan-Matrix mit Hydrat, d.h. der hydratisierten Form eines Salzhydrats, zumindest partiell gefüllt sind. Da das Salzhydrat in seinem hydratisierten Zustand (Hydrat-Zustand) ein grösseres Volumen beansprucht als in seinem dehydratisierten Zustand (Anhydrat-Zustand), wird dadurch gewährleistet, dass die Metallspan-Matrix beim Entladen, d.h. beim Übergang von kompakteren Anhydrat zum voluminöseren Hydrat nicht gesprengt wird. Dadurch können viele Ladungs/Entladungs-Zyklen des Behälters (K) erzielt werden, ohne die mikroskopische Struktur seiner Salzhydrat-Metallspan-Matrix und somit seiner Funktionsfähigkeit zu beeinträchtigen.

Vorzugsweise sind in der Metallspan-Matrix mindestens 90% der Metallspäne jeweils mit mindestens zwei weiteren Metallspänen verklebt, woduch eine dreidimensionale Struktur mit hoher resultierender Wärmeleitfähigkeit gebildet wird. Vorzugsweise haben die Metallspäne eine mittlere Länge im Bereich von 1mm bis 10mm.

Vorzugsweise werden als Metallspäne Aluminiumspäne verwendet. Vorzugsweise wird als anorganisches Klebemittel Wasserglas, d.h. Natrium-Silikat und/oder Kalium-Silikat verwendet. In einem ersten Schritt (S1) wird dabei ein fliessfähiges feuchtes Gemisch aus Aluminiumspänen und Wasserglas zu einem gewünschten porösen Gebilde, insbesonder zu einem blockartigen oder plattenartigen Gebilde (z.B. Quaderblock, Zylinderblock, Prismablock, etc.) umgeformt und gepresst. In einem zweiten Schritt (S2) wird das so erhaltene Gebilde bei Temperaturen im Bereich von 200°C bis 700°C getrocknet. Das als Klebemittel verwendete Wasserglas kann Aluminumpulver und/oder Graphitpartikel enthalten. Die Graphitpartikel enthalten vorzugsweise expandierten Graphit bzw. Blähgraphit.

Um die zumindest partielle Füllung der Zwischenräume der Metallspan-Matrix mit Hydrat, d.h. der hydratisierten Form eines Salzhydrats, herzustellen, wird in das im ersten Schritt und im zweiten Schritt erhaltene poröse Gebilde in einem dritten Schritt (S3) mit einer wässrigen Aufschlämmung von Salzhydrat, z.B. Ca(OH)₂-Aufschlämmung, welche gelöstes Salzhydrat und nicht-gelöste suspendierte Salzhydrat-Partikel enthält, getränkt bzw. imprägniert. Vorzugsweise erfolgt dieser dritte Schritt unter Verwendung mindestens einer der folgenden zwei Varianten:
3-1) Das poröse Gebilde wird in die Aufschlämmung in einem Tank bzw. einem Gefäss eingetaucht;
3-2) Das poröse Gebilde wird mit der Aufschlämmung besprüht;
Durch die Massnahme 1) und/oder 2) wird ein Benetzen der Metallspan-Matrix und somit ein zumindest partielles Füllen ihrer Zwischenräume mit Salzhydrat bewirkt.

In einem optionalen vierten Schritt (S4) kann das so getränkte bzw. imprägnierte poröse Gebilde in einem mit einem Fluid gefüllten Druckbehälter positioniert werden, wonach das Fluid in dem Druckbehälter isotrop unter Druck gesetzt wird, um die Salzhydrat-Aufschlämmung in die Zwischenräume der Metallspan-Matrix des porösen Gebildes zu pressen. Vorzugsweise erfolgt dieser vierte Schritt unter Verwendung mindestens einer der folgenden vier Varianten:
4-1) Das unter Druck gesetzte Fluid ist die Salzhydrat-Aufschlämmung, in welche das poröse Gebilde eingetaucht ist, wobei der Tank bzw. das Gefäss vorzugsweise der Druckbehälter ist.
4-2) Das unter Druck gesetzte Fluid ist ein Gas, insbesondere Luft.

Da der Duck in dem Fluid überall isotrop ist und insbesondere auch von aussen auf das poröse Gebilde einwirkt, besteht keine Gefahr eines Platzens bzw. Brechens des getränkten porösen Gebildes während des Hineinpressens der Salzhydrat-Aufschlämmung in die Hohlräume bzw. Poren des porösen Gebildes.
4-3) Das poröse Gebilde wird zumindest in Teilbereichen seiner äusseren Oberfläche mit der Salzhydrat-Aufschlämmung in Kontakt gebracht, und das poröse Gebilde wird zusammen mit der Salzhydrat-Aufschlämmung in eine Drehbewegung versetzt. Durch Zentrifugalkräfte (Trägheitskräfte) wird dabei die Salzhydrat-Aufschlämmung in die Zwischenräume der Metallspan-Matrix des porösen Gebildes gepresst. Vorzugsweise wird das poröse Gebilde in einer mit der Salzhydrat-Aufschlämmung gefüllten Zentrifuge zentrifugiert, wobei das Zentrifugal-Kraftfeld die Salzhydrat-Aufschlämmung in das poröse Gebilde drückt.
4-4) Das poröse Gebilde ist ein Hohlkörper, vorzugsweise eine Hohlkugel oder ein an seinen Enden abgedichteter Hohlzylinder, und das poröse Gebilde wird in die Salzhydrat-Aufschlämmung getaucht, welche unter Druck gesetzt wird. Durch den Druckgradienten zwischen der Aussenseite des porösen Gebildes und der Innenseite bzw. dem makroskopischen Hohlraum des porösen Gebildes wird die Salzhydrat-Aufschlämmung von aussen nach innen durch das poröse Gebilde hindurchgedrückt und somit dessen mikroskopische Hohlräume bzw. Zwischenräume bzw. Poren praktisch vollständig mit dem Salzhydrat in hydratisiertem Zustand gefüllt.

Da der Duck in der Salzhydrat-Aufschlämmung an der Aussenseite überall isotrop ist und der Hohlkörper ein Gewölbe darstellt, besteht keine Gefahr eines Platzens bzw. Brechens des getränkten porösen Gebildes während des Hindurchpressens der Salzhydrat-Aufschlämmung in die mikroskopischen Hohlräume bzw. Poren des porösen Gebildes.

Vorzugsweise hat der Behälter (K) entlang einer Behälterachse (BA) einen konstanten Querschnitt quer zur Behälterachse (BA). Dadurch wird der Behälter zu einer «Kartusche bzw. Patrone», welche (z.B. für den Heizbetrieb oder den Ladebetrieb der Kartusche / Patrone) in einen komplementär geformten Hohlraum hineingeschoben und aus diesem herausgezogen werden kann.

Vorzugsweise hat der Behälter (K) entlang seiner Behälterachse (BA) beabstandet angeordnete impermeable Trennwände, welche für das Anhydrat, das Hydrat, Wasser und Wasserdampf undurchlässig sind und welche den Innenraum des Behälters (K) in entlang der Behälterachse (BA) angeordnete Teilkammern unterteilen. Dies verhindert eine unkontrollierte Diffusion von Wasser oder Wasserdampf im Innern des Behälters entlang der Behälterachse, und dem Behälter kann abschnittsweise Wasser oder Wasserdampf im Heizbetrieb zugeführt oder im Ladebetrieb entzogen werden. Dies erleichtert insbesondere einen dosierten Heizbetrieb, d.h. ein dosiertes Entladen des Behälters, indem man den Behälter z.B. entlang seiner Behälterachse BA nach und nach in ein Wasserbad absenkt.

Der Querschnitt des Behälters (K) kann die Form eines Rechtecks, eines Quadrats, eines Kreises oder eines Kreisrings, eines Dreiecks oder eines Sechsecks aufweisen. Behälter mit diesen Formen lassen sich kompakt nebeneinander anordnen.

Der Querschnitt des Behälters (K) kann auch die Form eines periodischen Musters, insbesondere einer Welle mit Sinusprofil oder Dreiecksprofil, aufweisen. Auch Behälter mit diesen Formen lassen sich kompakt nebeneinander anordnen.

Die Verwendung eines solchen Behälters ist vorteilhaft, da das Anhydrat bzw. das Hydrat immer in den Poren des Behälters bleibt und ein Befüllen oder Entleeren des Innenraums des Behälters nicht notwendig ist. Da die Poren des Behälters mit dem Anhydrat und/oder dem Hydrat nur partiell gefüllt sind, kann sich das Anhydrat während des Heizbetriebs in das voluminösere Hydrat umwandeln, ohne den Behälter zu gefährden.

Vorzugsweise enthält die metallische Matrix Metallpartikel (MP), welche durch Sintern zu einem Metall-Sinterblock bzw. einem Metall-Keramikblock miteinander verbunden sind und eine dreidimensionale Metallkeramik-Matrix (MKM) bilden.

Vorzugsweise enthält die metallische Matrix Metallspäne (MS), welche mit einem anorganischen Klebemittel miteinander verbunden sind und eine dreidimensionale Metallspan-Matrix (MSM) bilden.

Vorzugsweise sind in dem Salzhydrat verteilte Partikel (MP, GP) aus einem Material mit hoher spezifischer Wärmeleitfähigkeit enthalten.

Vorzugsweise ist in dem Salzhydrat eine Gitterstruktur (MG, WR) mit hoher spezifischer Wärmeleitfähigkeit enthalten.

Alle der erwähnten metallischen Strukturen tragen zu einer guten Wärmeleitfähigkeit des porösen Gebildes bei, wodurch das Eindringen von Wärme in den Behälter beim Laden und das Austreten von Wärme aus dem Behälter beim Entladen erleichtert wird und schnell erfolgt.

Vorzugsweise hat das Salzhydrat eine poröse Struktur.

Die erwähnte poröse Struktur des Salzhydrats trägt zu einer guten Transportfähigkeit von Wassermolekülen des porösen Gebildes bei, wodurch das Eindringen von Wassermolekülen in den Behälter beim Entladen und das Austreten von Wassermolekülen aus dem Behälter beim Laden erleichtert wird und schnell erfolgt.

Vorzugsweise enthält die metallische Matrix Aluminium.

Vorzugsweise enthält das anorganische Klebemittel Wasserglas, insbesondere Natrium-Silikat und/oder Kalium-Silikat.

Die Kombination von Aluminium, vorzugsweise in Form von Spänen als Abfallprodukt der spanabhebenden Fertigung von Aluminiumteilen, mit Wasserglas als anorganisches Bindemittel ist besonders vorteilhaft, da die Aluminium-Späne an ihrer Oberfläche oxidiert sind und an ihrer Oberfläche eine Oxidschicht haben, welche mit dem Silikat des Bindemittels eine innige und besonders stabile Verbindung eingeht.

Vorzugsweise sind in dem Salzhydrat Aluminium-Partikel und/oder Graphit-Partikel verteilt. Diese verbessern die Wärmeleitfähigkeit des Salzhydrats.

Vorzugsweise hat der Behälter (K*) entlang einer Behälterachse (BA) einen konstanten Querschnitt quer zur Behälterachse (BA). Dadurch wird der Behälter zu einer «Kartusche bzw. Patrone», welche (z.B. für den Heizbetrieb oder den Ladebetrieb der Kartusche / Patrone) in einen komplementär geformten Hohlraum hineingeschoben und aus diesem herausgezogen werden kann.

Vorzugsweise hat der Behälter (K*) entlang seiner Behälterachse (BA) beabstandet angeordnete impermeable Trennwände, welche für das Anhydrat, das Hydrat, Wasser und Wasserdampf undurchlässig sind und welche das Volumen des Behälters (K*) in entlang der Behälterachse (BA) angeordnete Teilvolumina unterteilen. Dies verhindert eine unkontrollierte Diffusion von Wasser oder Wasserdampf im Innern des Behälters entlang der Behälterachse, und dem Behälter kann abschnittsweise Wasser oder Wasserdampf im Heizbetrieb zugeführt oder im Ladebetrieb entzogen werden. Dies erleichtert insbesondere einen dosierten Heizbetrieb, d.h. ein dosiertes Entladen des Behälters, indem man den Behälter z.B. entlang seiner Behälterachse BA nach und nach in ein Wasserbad absenkt.

Der Querschnitt des Behälters (K*) kann die Form eines Rechtecks, eines Quadrats, eines Kreises oder eines Kreisrings, eines Dreiecks oder eines Sechsecks aufweisen. Behälter mit diesen Formen lassen sich kompakt nebeneinander anordnen.

Der Querschnitt des Behälters (K*) kann auch die Form eines periodischen Musters, insbesondere einer Welle mit Sinusprofil oder Dreiecksprofil, aufweisen. Auch Behälter mit diesen Formen lassen sich kompakt nebeneinander anordnen.

Weitere Vorteile, Merkmale und Anwendungsmöglichkeiten der Erfindung ergeben sich aus der nun folgenden, nicht einschränkend aufzufassenden Beschreibung von Ausführungsbeispielen der Erfindung anhand der Zeichnung. Es zeigen:
Fig. 1 eine schematische Darstellung eines bekannten Verfahrens zum Erzeugen von Wärme;
Fig. 2 eine schematische Darstellung eines bekannten Verfahrens zum Speichern von Wärme;
Fig. 3 eine schematische Darstellung einer bekannten Vorrichtung zum Erzeugen von Wärme;
Fig. 4 eine schematische Darstellung einer bekannten Vorrichtung zum Speichern von Wärme;
Fig. 5 eine schematische Darstellung einer beispielhaften Anwendung eines erfindungsgemässen Verfahrens und einer erfindungsgemässen Vorrichtung;
Fig. 6a eine Draufsicht einer ersten Ausführung einer erfindungsgemässen Kartusche im Ladebetrieb;
Fig. 6b eine Schnittansicht entlang der Schnittebene A-A der ersten Ausführung der Kartusche im Ladebetrieb;
Fig. 6c eine Schnittansicht entlang der Schnittebene B-B der ersten Ausführung der Kartusche im Ladebetrieb;
Fig. 7a eine Draufsicht der ersten Ausführung der erfindungsgemässen Kartusche im Heizbetrieb;
Fig. 7b eine Schnittansicht entlang der Schnittebene A-A der ersten Ausführung der Kartusche im Heizbetrieb;
Fig. 7c eine Schnittansicht entlang der Schnittebene B-B der ersten Ausführung der Kartusche im Heizbetrieb;
Fig. 8a eine Draufsicht auf eine plattenartige Kartusche im Ladebetrieb;
Fig. 8b eine Schnittansicht entlang der Schnittebene A-A der plattenartigen Kartusche;
Fig. 9a eine Perspektivansicht einer transparent dargestellten ersten Variante einer blockartigen Kartusche;
Fig. 9b eine Perspektivansicht einer transparent dargestellten zweiten Variante einer blockartigen Kartusche;
Fig. 10 einen Stapel aus blockartigen Kartuschen der Fig. 9a, die fluidmässig in Serie geschaltet sind;
Fig. 11 einen Stapel aus mit Eingriffsformationen versehenen blockartigen Kartuschen der Fig. 9a, die fluidmässig in Serie geschaltet sind;
Fig. 12 eine Perspektivansicht einer weiteren Variante einer plattenartigen Kartusche mit Eingriffsformationen;
Fig. 13 eine Seitenansicht eines mit einem Verbrennungsmotor versehenen Fahrzeugs, an welchem zwei Stapel aus plattenartigen Kartuschen für deren Ladevorgang angeordnet sind;
Fig. 14 eine Schnittansicht einer weiteren Variante einer plattenartigen Kartusche;
Fig. 15 eine Schnittansicht einer zylinderförmigen Kartusche;
Fig. 16 eine Schnittansicht einer weiteren Variante einer plattenartigen Kartusche;
Fig. 17 eine Schnittansicht einer weiteren Variante einer plattenartigen Kartusche;
Fig. 18 eine Schnittansicht einer stabförmigen Kartusche;
Fig. 19 eine Schnittansicht einer weiteren Variante einer stabförmigen Kartusche;
Fig. 20 eine Schnittansicht einer Ausführung eines semipermeablen Wandbereichs einer Kartusche entlang einer Schnittebene senkrecht zur Ebene des Wandbereichs bzw. senkrecht zur Tangentialebene des Wandbereichs;
Fig. 21 eine Schnittansicht einer weiteren Ausführung eines semipermeablen Wandbereichs einer Kartusche K entlang einer Schnittebene senkrecht zur Ebene des Wandbereichs WB bzw. senkrecht zur Tangentialebene des Wandbereichs;
Fig. 22 eine Schnittansicht einer ersten Ausführung einer Kartuschenfüllung;
Fig. 23 eine Schnittansicht einer zweiten Ausführung einer Kartuschenfüllung;
Fig. 24 eine Schnittansicht einer dritten Ausführung einer Kartuschenfüllung;
Fig. 25 eine Schnittansicht einer vierten Ausführung einer Kartuschenfüllung;
Fig. 26 eine Schnittansicht einer weiteren Ausführung einer Kartusche.

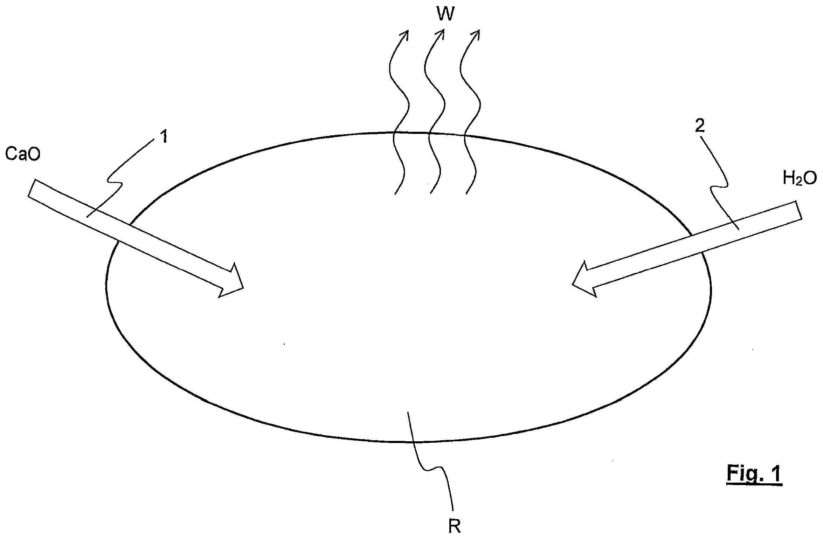

In Fig. 1 ist ein bekanntes Verfahren zum Erzeugen (Abgeben, Freisetzen) von Wärme W schematisch gezeigt. Die Freigabe von Wärme W erfolgt bei einer Reaktion zwischen einerseits einem Feststoff und/oder einer ersten Flüssigkeit 1 und andererseits einem Gas und/oder einer zweiten Flüssigkeit 2. Die dabei entstehende Reaktionswärme W wird abgeführt.

Es wird eine dosierte Menge des Feststoffs und/oder der ersten Flüssigkeit 1 dem Reaktionsraum R zugeführt. Es wird ausserdem eine dosierte Menge des Gases und/oder der zweiten Flüssigkeit 2 dem Reaktionsraum R zugeführt.

In dem Reaktionsraum R werden der Feststoff und/oder die erste Flüssigkeit 1 und das Gas und/oder die zweite Flüssigkeit 2 miteinander in Kontakt gebracht. Die frei werdende Wärme W wird aus dem Reaktionsraum R abgeführt.

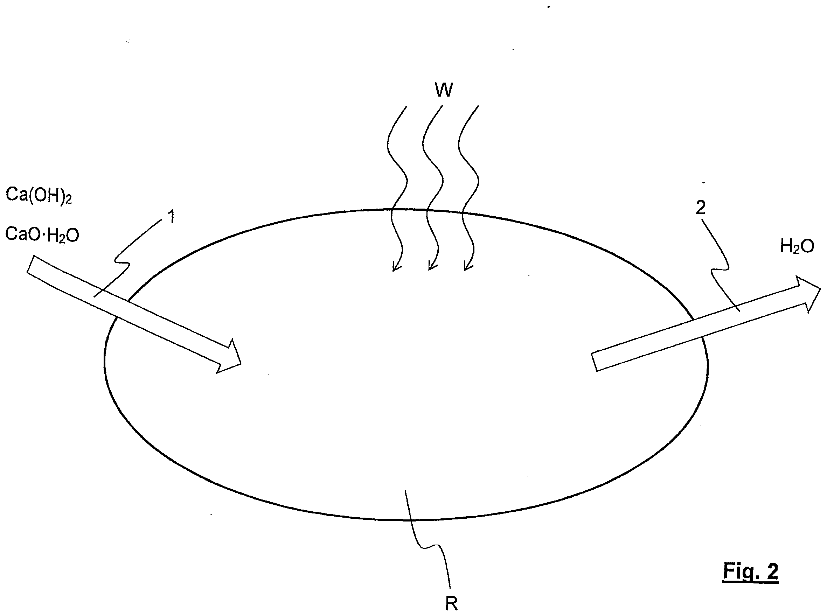

In Fig. 2 ist ein bekanntes Verfahren zum Speichern von Wärme W schematisch gezeigt. Bei einer Reaktion zwischen einerseits einem Feststoff und/oder einer ersten Flüssigkeit 1 und andererseits einem Gas und/oder einer zweiten Flüssigkeit 2 wird die dabei zu speichernde Reaktionswärme W zugeführt.

Es wird eine dosierte Menge des Feststoffs und/oder der ersten Flüssigkeit 1 einem Reaktionsraum R zugeführt. Es wird ausserdem eine dosierte Menge Wärme W dem Reaktionsraum R zugeführt.

In dem Reaktionsraum R werden der Feststoff und/oder die erste Flüssigkeit 1 und die Wärme W miteinander in Kontakt gebracht, d.h. der Feststoff und/oder die erste Flüssigkeit 1 wird der Wärme W ausgesetzt. Das frei werdende Gas und/oder die frei werdende zweite Flüssigkeit 2 wird aus dem Reaktionsraum R abgeführt.

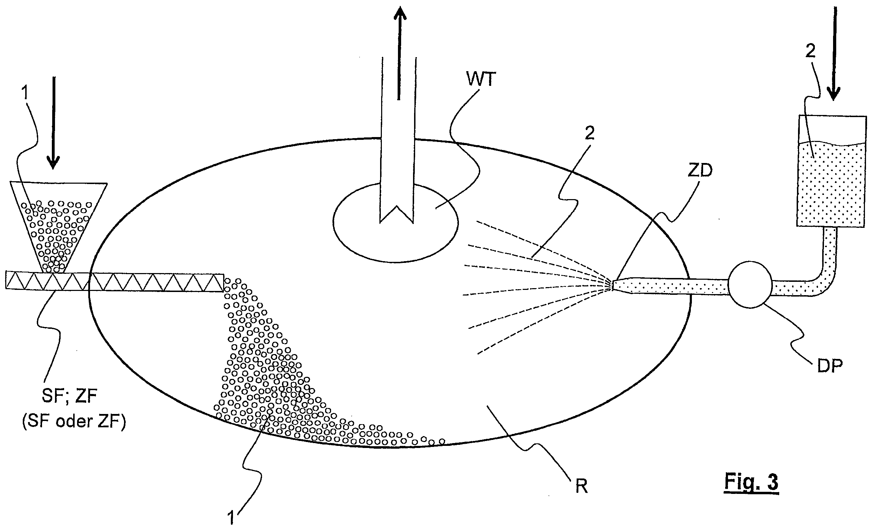

In Fig. 3 ist eine bekannte Vorrichtung bzw. Anlage zur Durchführung des Verfahrens zum Erzeugen von Wärme schematisch gezeigt.

Die Vorrichtung enthält eine den Reaktionsraum R bildende Reaktionskammer mit einem Mittel zum Abführen von Reaktionswärme in Form eines Wärmetauschers WT.

Die Vorrichtung enthält ausserdem ein erstes Zufuhrmittel in Form eines Schneckenförderers SF und/oder eines Zahnriemenförderers ZF zum dosierten Zuführen eines Feststoffs und/oder einer ersten Flüssigkeit 1 in die Reaktionskammer R.

Die Vorrichtung enthält ausserdem ein zweites Zufuhrmittel in Form einer Dosierpumpe DP und/oder einer Zerstäubungsdüse ZD zum dosierten Zuführen eines Gases und/oder einer zweiten Flüssigkeit 2 in die Reaktionskammer R.

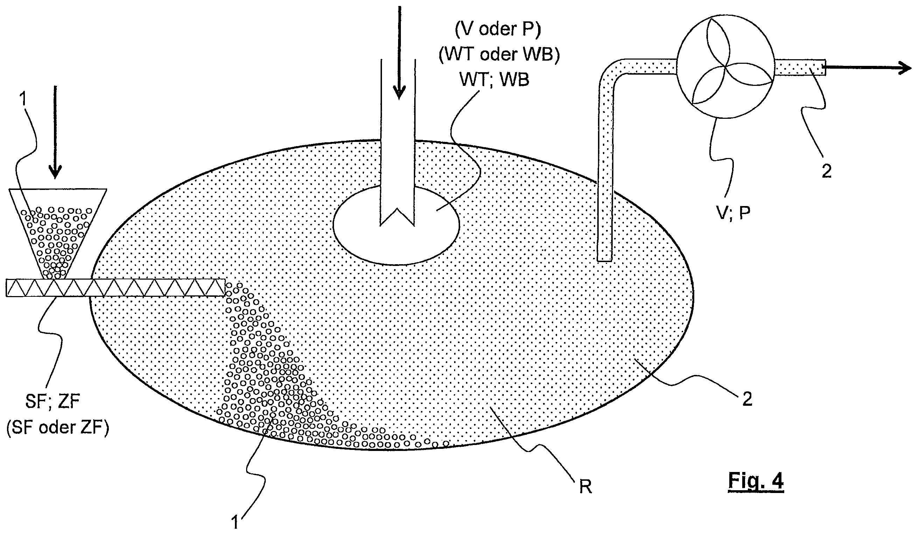

In Fig. 4 ist eine bekannte Vorrichtung bzw. Anlage zur Durchführung des Verfahrens zum Speichern von Wärme schematisch gezeigt.

Die Vorrichtung enthält eine den Reaktionsraum bildende Reaktionskammer mit einem Mittel zum Zuführen von Reaktionswärme in Form eines Wärmetauschers WT und/oder eines Wirbelbetts WB.

Die Vorrichtung enthält ausserdem ein erstes Mittel in Form eines Schneckenförderers SF und/oder eines Zahnriemenförderers ZF zum dosierten Zuführen eines Feststoffs oder einer ersten Flüssigkeit 1 in die Reaktionskammer R.

Die Vorrichtung enthält ausserdem ein zweites Mittel in Form eines Gebläses bzw. Ventilators V und/oder einer Pumpe P zum Abführen eines Gases oder einer zweiten Flüssigkeit 2 aus der Reaktionskammer R.

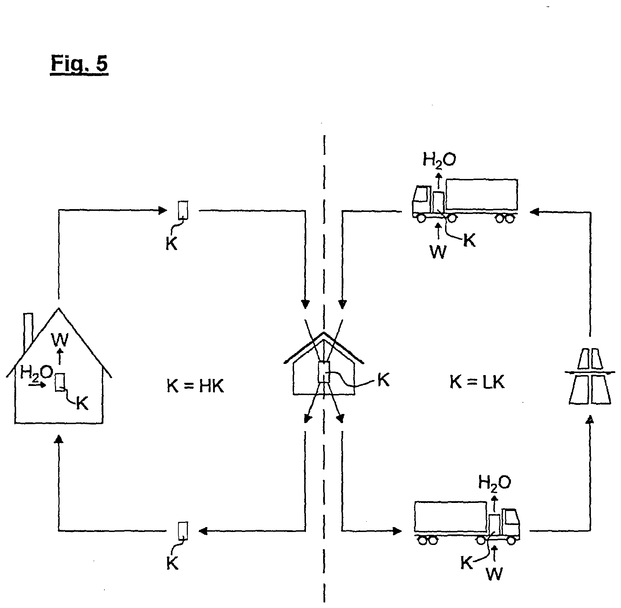

In Fig. 5 ist eine schematische Darstellung einer beispielhaften Anwendung der erfindungsgemässen Verfahren und der erfindungsgemässen Vorrichtungen gezeigt.

Man erkennt in der linken Bildhälfte ein Haus, in welchem eine Kartusche K als Heizkartusche HK verwendet wird. Dabei wird der mit einem Anhydrat (z.B. CaO) gefüllten Kartusche Wasser zugeführt, wodurch das in der Kartusche enthaltene Anhydrat hydratisiert wird, wobei das entsprechende Hydrat (z.B. Ca(OH)₂) entsteht und Hydratationswärme W aus der Kartusche K freigesetzt wird. Diese Hydratationswärme W kann zum Heizen verwendet werden, z.B. Brauchwasser-Erwärmung und Raumluft-Erwärmung.

Man erkennt in der rechten Bildhälfte ein mit einem Verbrennungsmotor versehenes Fahrzeug, in welchem eine Kartusche K als Ladekartusche LK verwendet wird. Dabei wird der mit einem Hydrat (z.B. Ca(OH)₂) gefüllten Kartusche Wärme W zugeführt (Verbrennungsmotor-Abwärme), wodurch das in der Kartusche enthaltene Hydrat dehydratisiert wird, wobei wieder das entsprechende Anhydrat (z.B. CaO) entsteht und Hydratationswärme W in der Kartusche K gespeichert wird. Diese Hydratationswärme W kann dann erneut zum Heizen verwendet werden.

In der Mitte des Bildes von Fig. 5 ist eine Kartuschen-Tauschstation gezeigt. Dort werden die als Heizkartuschen HK verwendbaren geladenen Kartuschen (Anhydrat-Kartuschen) gegen zu ladende Ladekartuschen LK (Hydrat-Kartuschen) ausgetauscht.

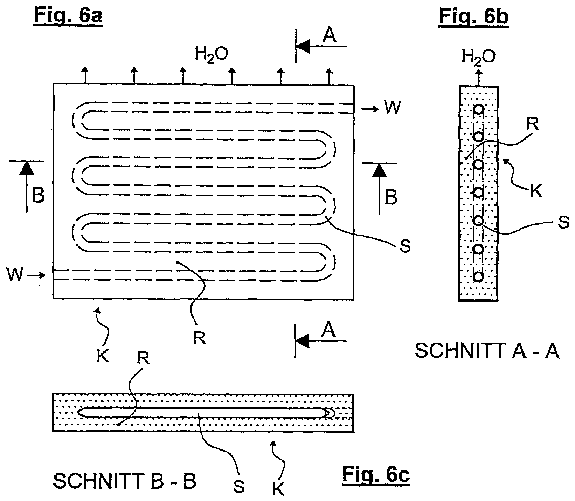

In Fig. 6a ist eine Draufsicht einer ersten Ausführung einer erfindungsgemässen Kartusche K im Ladebetrieb gezeigt. Man erkennt die Kartusche K mit einem Reaktionsraum R, der mit einem Hydrat in Pulverform gefüllt ist und von einer Rohrschlange S durchzogen ist, welche z.B. aus einem Metall gebildet ist. Durch die Rohrschlange S lässt man ein heisses Fluid strömen, dessen Wärme W durch die Wand der Rohrschlange S in das Hydrat fliesst. Das heisse Fluid kann ein heisses Gas, z.B. heisse Luft oder heisses Abgas eines Verbrennungsmotors, oder eine heisse Flüssigkeit, z.B. heisses Öl aus einem Parabolrinnen-Kraftwerk sein. Durch die in das Hydrat fliessende Wärme wird das Hydrat dehydratisiert, wobei Wasser (H₂O) aus der Kartusche K austritt und in dem Reaktionsraum das entsprechende Anhydrat gebildet wird. Das Wasser tritt über einen semipermeablen Wandbereich (nicht gezeigt) der Kartusche K aus. Im Falle des Ladebetriebs mittels eines heissen Gases (z.B. heisses Abgas) kann die Rohrschlange S auch kleine Öffnungen enthalten (gestrichelt angedeutet), durch welche das heisse Gas in das Hydrat-Pulver eindringt und dieses nach und nach dehydratisiert und zu dem entsprechenden Anhydrat umwandelt.

In Fig. 6b ist eine Schnittansicht entlang der Schnittebene A-A der ersten Ausführung der Kartusche K im Ladebetrieb gezeigt. Man erkennt den Reaktionsraum R mit der darin verlaufenden Rohrschlange S. Der Reaktionsraum R ist mit einem Hydrat/Anhydrat-Pulver gefüllt (punktiert angedeutet), wobei im entladenen Zustand das Hydrat den Reaktionsraum R fast vollständig ausfüllt, während im geladenen Zustand das Anhydrat den Reaktionsraum R in einem grösseren Masse bzw. zumindest fast vollständig ausfüllt.

In Fig. 6c ist eine Schnittansicht entlang der Schnittebene B-B der ersten Ausführung der Kartusche im Ladebetrieb gezeigt. Man erkennt wieder den Reaktionsraum R, einen Teil der Rohrschlange S sowie die Füllung mit Hydrat/Anhydrat-Pulver (punktiert angedeutet).

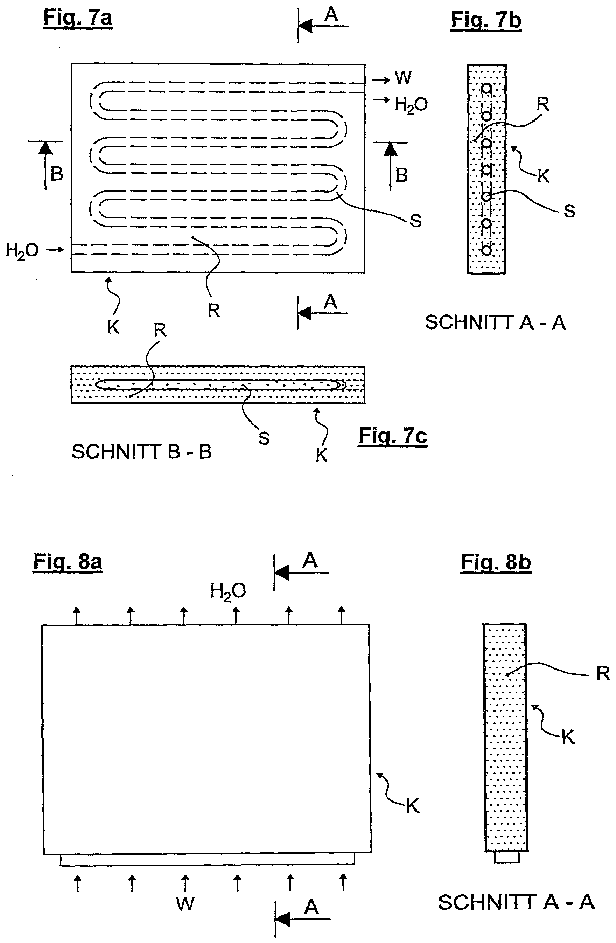

In Fig. 7a ist eine Draufsicht der ersten Ausführung der erfindungsgemässen Kartusche K im Heizbetrieb gezeigt. Man erkennt die Kartusche K mit einem Reaktionsraum R, der mit einem Anhydrat in Pulverform gefüllt ist und von einer Rohrschlange S durchzogen ist, welche z.B. aus einem Metall gebildet ist. Die Rohrschlange S enthält kleine Öffnungen (gestrichelt angedeutet). Durch die Rohrschlange S lässt man Wasser als Flüssigkeit und/oder als Wasserdampf strömen. Das flüssige Wasser und/oder der Wasserdampf dringen durch die kleinen Öffnungen der Rohrschlange S in das Anhydrat-Pulver ein, wodurch dieses nach und nach hydratisiert und so zu dem entsprechenden Hydrat umgewandelt wird. Die dabei frei werdende Hydratationswärme W kann über mindestens eine stark wärmeleitende Wand der Kartusche K an ein Wärmeträgerfluid zum Zwecke des Heizens abgegeben werden. Im Falle des Heizbetriebs mittels Wasser in der Rohrschlange S kann auch das durch die Rohrschlange S strömende Wasser als Wärmeträgerfluid verwendet werden. Somit erfolgt über die Rohrschlange S mit ihren kleinen Öffnungen sowohl eine dosierte Zufuhr von Wasser in das Anhydrat-Pulver als auch ein Abführen der Hydratationswärme W in dem Wasser.

In Fig. 7b ist eine Schnittansicht entlang der Schnittebene A-A der ersten Ausführung der Kartusche K im Heizbetrieb gezeigt. Man erkennt den Reaktionsraum R mit der darin verlaufenden Rohrschlange S. Der Reaktionsraum R ist mit einem Hydrat/Anhydrat-Pulver gefüllt (punktiert angedeutet), wobei im entladenen Zustand das Hydrat den Reaktionsraum R fast vollständig ausfüllt, während im geladenen Zustand das Anhydrat den Reaktionsraum R in einem grösseren Masse bzw. zumindfest fast vollständig ausfüllt.

In Fig. 7c ist eine Schnittansicht entlang der Schnittebene B-B der ersten Ausführung der Kartusche K im Heizbetrieb gezeigt. Man erkennt wieder den Reaktionsraum R, einen Teil der Rohrschlange S sowie die Füllung mit Hydrat/Anhydrat-Pulver (punktiert angedeutet).

In Fig. 8a ist eine Draufsicht auf eine plattenartige Kartusche K im Ladebetrieb gezeigt. Man erkennt im unteren Teil der Kartusche K mittels eines heissen Gases in die Kartusche K eindringende Wärme W, welche das in der Kartusche K enthaltene Hydrat dehydratisiert und in das entsprechende Anhydrat umwandelt. Im oberen Teil der Kartusche K sieht man durch Pfeile angedeutet als Wasserdampf austretendes Wasser.

In Fig. 8b ist eine Schnittansicht entlang der Schnittebene A-A der plattenartige Kartusche K gezeigt. Man erkennt wieder den Reaktionsraum R sowie die Füllung mit Hydrat/Anhydrat-Pulver (punktiert angedeutet).

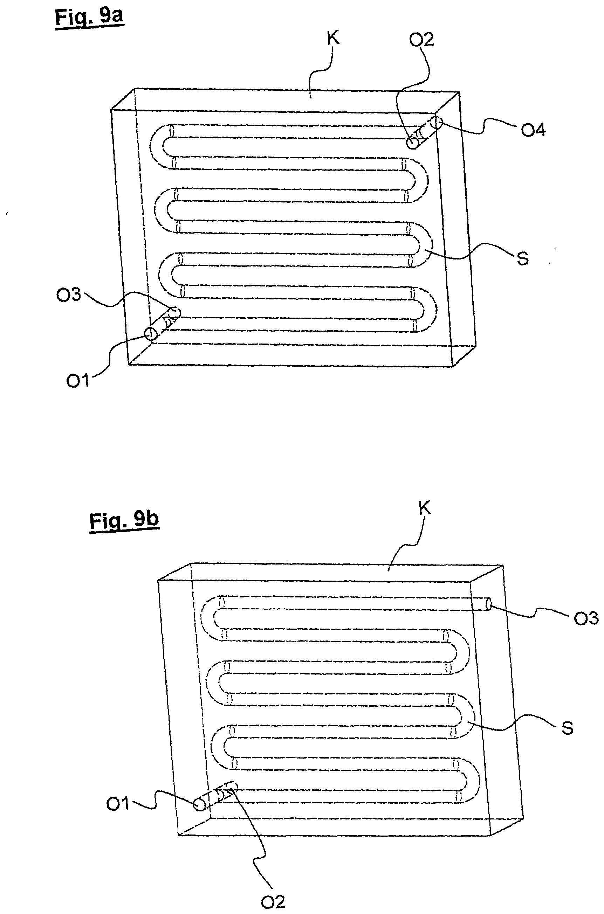

In Fig. 9a ist eine Perspektivansicht einer transparent dargestellten ersten Variante einer blockartigen Kartusche K gezeigt. Man erkennt eine sich im Innern der Kartusche K erstreckende Rohrschlange S, welche jeweils mit zwei diametral gegenüberliegende Öffnungen O1 und O2 an einer ersten Grossfläche der Kartusche K in Fluidverbindung steht sowie jeweils mit zwei diametral gegenüberliegende Öffnungen O3 und O4 an einer zweiten Grossfläche der Kartusche K in Fluidverbindung steht. Die Rohrschlange S hat entlang des gesamtem durch sie definierten Fluidpfads eine Vielzahl kleiner Öffnungen bzw. einen semipermeablen Wandbereich, durch welchen Wasser oder Wasserdampf hindurchtreten können und durch welchen weder Hydrat noch Anhydrat hindurchtreten können.

Beim Entladen der Kartusche K bzw. während ihrer Verwendung als Heizkartusche HK wird Wasser und/oder Wasserdampf von der ersten Öffnung O1 zu der zweiten Öffnung O2 durch die Rohrschlange S geleitet. Dabei gelangt Wasser und/oder Wasserdampf über die Vielzahl kleiner Öffnungen bzw. über den semipermeablen Wandbereich in das Anhydrat im Innern der Kartusche K, wodurch das Anhydrat nach und nach in Hydrat umgewandelt wird und in der Kartusche K nach und nach Wärme entsteht, die an ein Heizsystem abgegeben werden kann.

Beim Laden der Kartusche K bzw. während ihrer Verwendung als Ladekartusche LK wird ein heisses Fluid als Wärmequelle, vorzugsweise heisse Luft oder heisses Abgas eines Verbrennungsvorgangs, von der dritten Öffnung O3 zu der vierten Öffnung O4 durch die Rohrschlange S geleitet. Dabei gelangt Wärme in das Hydrat im Innern der Kartusche K, wodurch das Hydrat nach und nach in Anhydrat umgewandelt wird und in der Kartusche K nach und nach Wärme gespeichert wird, die von der Wärmequelle stammt. Der dabei in der Kartusche K gebildete Wasserdampf gelangt über die Vielzahl kleiner Öffnungen bzw. über den semipermeablen Wandbereich in die Rohrschlange S und wird in dem Luftstrom oder Abgasstrom aus der Kartusche K abgeführt.

In Fig. 9b ist eine Perspektivansicht einer transparent dargestellten zweiten Variante einer blockartigen Kartusche K gezeigt. Man erkennt eine sich im Innern der Kartusche K erstreckende Rohrschlange S, welche mit einer ersten Öffnung O1 an einer ersten Grossfläche der Kartusche K, einer zweiten Öffnung O2 an einer zweiten Grossfläche der Kartusche K und mit einer dritten Öffnung O3 an einer Stirnfläche bzw. Kleinfläche der Kartusche K in Fluidverbindung steht. Ähnlich wie bei der ersten Variante in Fig. 9a hat die Rohrschlange S entlang des gesamtem durch sie definierten Fluidpfads eine Vielzahl kleiner Öffnungen bzw. einen semipermeablen Wandbereich, durch welchen Wasser oder Wasserdampf hinduchtreten können und durch welchen weder Hydrat noch Anhydrat hindurchtreten können.

Beim Entladen der Kartusche K bzw. während ihrer Verwendung als Heizkartusche HK wird Wasser und/oder Wasserdampf von der ersten Öffnung O1 zu der dritten Öffnung O3 durch die Rohrschlange S geleitet. Dabei gelangt Wasser und/oder Wasserdampf über die Vielzahl kleiner Öffnungen bzw. über den semipermeablen Wandbereich in das Anhydrat im Innern der Kartusche K, wodurch das Anhydrat nach und nach in Hydrat umgewandelt wird und in der Kartusche K nach und nach Wärme entsteht, die an ein Heizsystem abgegeben werden kann.

Beim Laden der Kartusche K bzw. während ihrer Verwendung als Ladekartusche LK wird ein heisses Fluid als Wärmequelle, vorzugsweise heisse Luft oder heisses Abgas eines Verbrennungsvorgangs, von der zweiten Öffnung O2 zu der dritten Öffnung O3 durch die Rohrschlange S geleitet. Dabei gelangt Wärme in das Hydrat im Innern der Kartusche K, wodurch das Hydrat nach und nach in Anhydrat umgewandelt wird und in der Kartusche K nach und nach Wärme gespeichert wird, die von der Wärmequelle stammt. Der dabei in der Kartusche K gebildete Wasserdampf gelangt über die Vielzahl kleiner Öffnungen bzw. über den semipermeablen Wandbereich in die Rohrschlange S und wird in dem Luftstrom oder Abgasstrom aus der Kartusche K abgeführt.

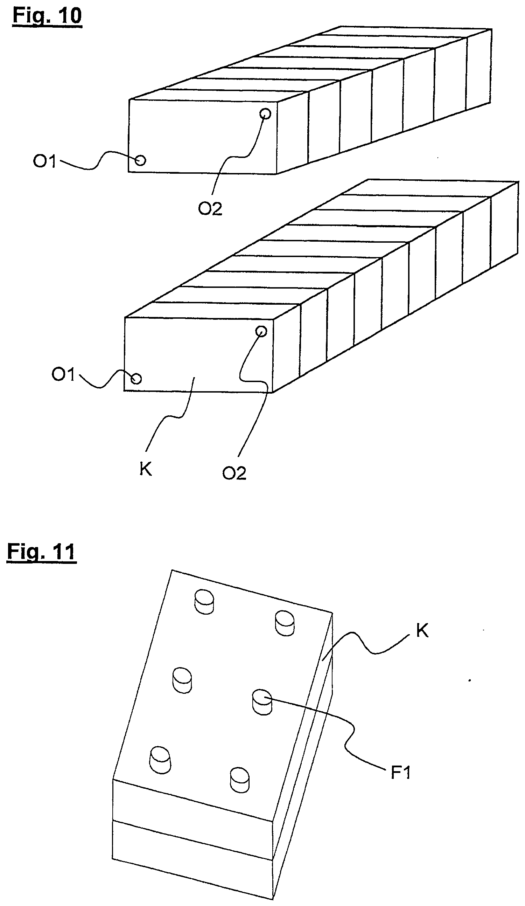

In Fig. 10 ist ein Stapel aus blockartigen Kartuschen K der Fig. 9a gezeigt, die fluidmässig in Serie geschaltet sind. Jede der Kartuschen K in dem Stapel enthält eine (nicht gezeigte) Rohrschlange S (siehe Fig. 9a). In dem Stapel sind alle Rohrschlangen S der jeweiligen Kartuschen K zu einer sehr langen Serien-Rohrschlange in Serie geschaltet. Durch diese Serien-Rohrschlange kann ein heisses Gas, z.B. ein heisses Abgas, oder eine heisse Flüssigkeit, z.B. ein heisses Öl, hindurchgeleitet werden, wodurch ein in den jeweiligen Kartuschen K enthaltenes Hydrat dehydratisiert und die Kartuschen nach und nach geladen werden. Der dabei aus dem Hydrat austretende Wasserdampf kann, wie weiter oben beschrieben, über einen semipermeablen Wandbereich (nicht gezeigt) der jeweiligen Kartusche K aus der Kartusche austreten. Im Falle des Ladebetriebs mittels eines heissen Gases (z.B. heisses Abgas) kann die Rohrschlange S auch kleine Öffnungen enthalten (siehe Fig. 6a, Fig. 7a, Fig. 9a, Fig. 9b, jeweils gestrichelt angedeutet), durch welche die Wärme des heissen Gases und/oder das heisse Gas selbst in das Hydrat-Pulver eindringen und dieses nach und nach dehydratisieren und zu dem entsprechenden Anhydrat umwandeln kann.

Beim Stapeln der Kartuschen K werden die beiden diametral gegenüberliegende Öffnungen O1 und O2 der ersten Grossfläche (siehe Fig. 9a) einer ersten Kartusche K mit den beiden diametral gegenüberliegenden Öffnungen O3 und O4 der zweiten Grossfläche (siehe Fig. 9a) einer zweiten Kartusche K in Registrierstellung gebracht, wobei zwischen den jeweiligen beiden Öffnungen in Registrierstellung eine fluiddichte Verbindung zwischen den beiden benachbarten Kartuschen K in dem Stapel gebildet und somit die gesamte Serien-Rohrschlange des Kartuschen-Stapels gebildet wird. Es versteht sich, dass der Kartuschen-Stapel im installierten Zustand in einer beliebigen räumlichen Orientierung angeordnet werden kann. Insbesondere kann er je nach Einbausituation vertikal oder horizontal angeordnet sein.

In Fig. 11 ist ein Stapel aus mit Eingriffsformationen F1 versehenen blockartigen Kartuschen K der Fig. 9a gezeigt, die fluidmässig in Serie geschaltet sind. Die Kartuschen K können dabei wie Lego-Steine aufeinander gestapelt werden.

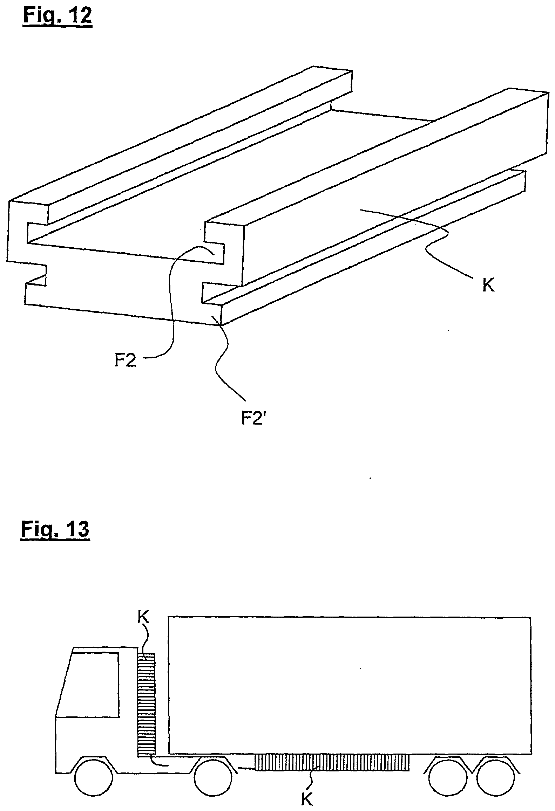

In Fig. 12 ist eine Perspektivansicht einer weiteren Variante einer plattenartigen Kartusche K mit Eingriffsformationen F2 und dazu komplementären Eingriffsformationen F2' gezeigt. Die Kartuschen können dabei mittels der Eingriffsformationen F2 und F2' formschlüssig miteinander verbunden werden.

In Fig. 13 ist eine Seitenansicht eines mit einem Verbrennungsmotor versehenen Fahrzeugs gezeigt, an welchem zwei Stapel aus plattenartigen Kartuschen K für deren Ladevorgang angeordnet sind. Die beiden Stapel entsprechen den in Fig. 10 gezeigten Stapeln.

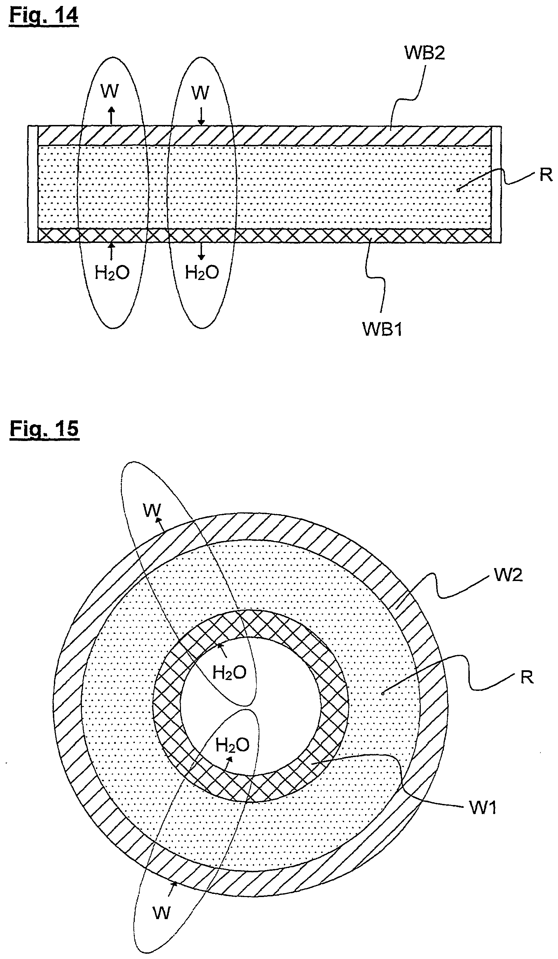

In Fig. 14 ist eine Schnittansicht einer weiteren Variante einer plattenartigen Kartusche K gezeigt. Die Schnittebene ist orthogonal zu einer Längsachse der plattenartigen Kartusche K.

Die Kartusche K enthält einen ebenen ersten Wandbereich WB1 (als Kreuzschraffur gezeigt), welcher als semipermeabler Wandbereich mit einer Vielzahl von Löchern gebildet ist, insbesondere mit Rundlöchern oder Längslöchern oder Kreuzlöchern oder Sternlöchern. Der erste Wandbereich WB1 kann aus Metall oder aus Keramik, z.B. aus Metallkeramik oder aus Oxidkeramik, oder aus einer Kombination von Metall und Keramik nach der Art eines Keramikfilters gebildet sein.

Die Kartusche enthält einen ebenen zweiten Wandbereich WB2, welcher aus einem stark wärmeleitenden Material, vorzugsweise aus Metall, z.B. Kupfer, Aluminium, Stahl, etc., oder Graphit gebildet ist.

Die Kartusche K enthält eine Reaktionskammer R zwischen dem ebenen ersten Wandbereich WB1 und dem ebenen zweiten Wandbereich WB2. Diese Reaktionskammer R ist je nach Ladezustand der Kartusche K mit Hydrat und/oder mit Anhydrat gefüllt.

Der linke ovalförmige Bereich zeigt schematisch den Heizbetrieb dieser Kartusche K, nämlich «Wasser rein, Wärme raus».

Der rechte ovalförmige Bereich zeigt schematisch den Ladebetrieb dieser Kartusche K, nämlich «Wärme rein, Wasser raus».

In Fig. 15 ist eine Schnittansicht einer zylinderförmigen Kartusche K gezeigt. Die Schnittebene ist orthogonal zu einer Längsachse der zylinderförmigen Kartusche K.

Die Kartusche K enthält einen ersten Wandbereich WB1 in Form eines inneren Zylindermantels (als Kreuzschraffur gezeigt), welcher als semipermeabler Wandbereich mit einer Vielzahl von Löchern gebildet ist, insbesondere mit Rundlöchern oder Längslöchern oder Kreuzlöchern oder Sternlöchern. Der erste Wandbereich WB1 kann aus Metall oder aus Keramik, z.B. aus Metallkeramik oder aus Oxidkeramik, oder aus einer Kombination von Metall und Keramik nach der Art eines Keramikfilters gebildet sein.

Die Kartusche enthält einen zweiten Wandbereich WB2 in Form eines äusseren Zylindermantels, welcher aus einem stark wärmeleitenden Material, vorzugsweise aus Metall, z.B. Kupfer, Aluminium, Stahl, etc., oder Graphit gebildet ist.

Die Kartusche K enthält eine Reaktionskammer R zwischen dem ersten Wandbereich WB1 und dem zweiten Wandbereich WB2. Diese Reaktionskammer R ist je nach Ladezustand der Kartusche K mit Hydrat und/oder mit Anhydrat gefüllt.

Der obere ovalförmige Bereich zeigt schematisch den Heizbetrieb dieser Kartusche K, nämlich «Wasser rein, Wärme raus».

Der untere ovalförmige Bereich zeigt schematisch den Ladebetrieb dieser Kartusche K, nämlich «Wärme rein, Wasser raus».

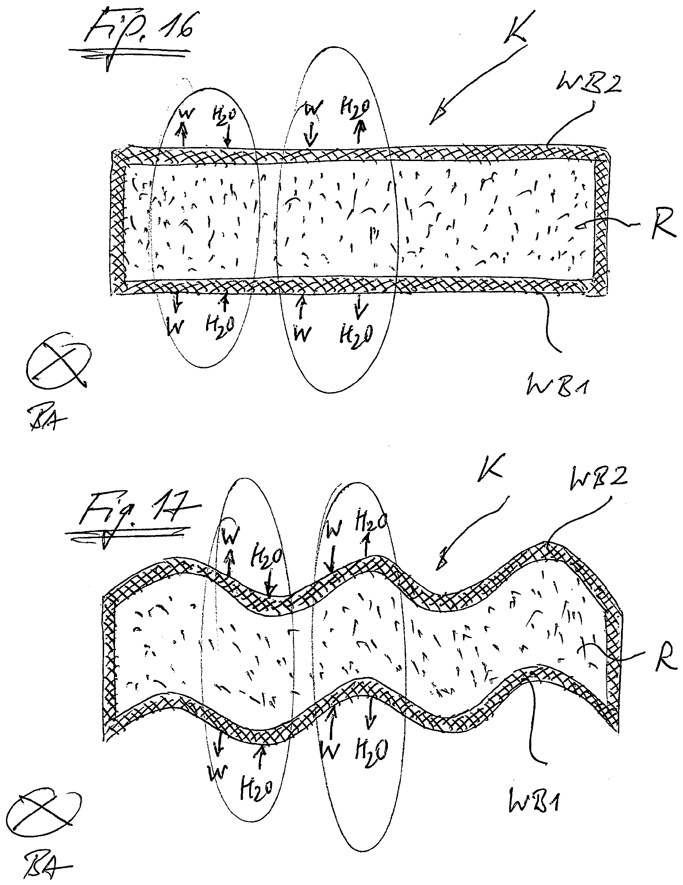

In Fig. 16 ist eine Schnittansicht einer weiteren Variante einer plattenartigen Kartusche K gezeigt. Die Schnittebene ist orthogonal zu einer Längsachse BA der plattenartigen Kartusche K.

Die Kartusche K enthält einen ebenen ersten Wandbereich WB1 aus Metall (als Kreuzschraffur gezeigt), welcher als semipermeabler Wandbereich mit einer Vielzahl von Löchern gebildet ist, insbesondere mit Rundlöchern oder Längslöchern oder Kreuzlöchern oder Sternlöchern. Der erste Wandbereich WB1 kann aus Metallkeramik nach der Art eines Keramikfilters gebildet sein.

Die Kartusche K enthält einen ebenen zweiten Wandbereich WB2 aus Metall (als Kreuzschraffur gezeigt), welcher als semipermeabler Wandbereich mit einer Vielzahl von Löchern gebildet ist, insbesondere mit Rundlöchern oder Längslöchern oder Kreuzlöchern oder Sternlöchern. Der zweite Wandbereich WB2 kann aus Metallkeramik nach der Art eines Keramikfilters gebildet sein.

Als Metall wird z.B. Kupfer, Aluminium, Stahl, etc. verwendet.

Die Kartusche K enthält eine Reaktionskammer R zwischen dem ebenen ersten Wandbereich WB1 und dem ebenen zweiten Wandbereich WB2. Diese Reaktionskammer R ist je nach Ladezustand der Kartusche K mit Hydrat und/oder mit Anhydrat gefüllt.

Der linke ovalförmige Bereich zeigt schematisch den Heizbetrieb dieser Kartusche K, nämlich «Wasser rein, Wärme raus».

Der rechte ovalförmige Bereich zeigt schematisch den Ladebetrieb dieser Kartusche K, nämlich «Wärme rein, Wasser raus».

Da die beiden semipermeablen Wandbereiche WB1 und WB2 aus Metall bestehen, können an jedem von ihnen sowohl Wasser bzw. Wasserdampf als auch Wärme gut sowohl in die Kartusche K hinein als auch aus der Kartusche heraus transportiert werden.

In Fig. 17 ist eine Schnittansicht einer weiteren Variante einer plattenartigen Kartusche gezeigt. Die Schnittebene ist orthogonal zu einer Längsachse BA der plattenartigen Kartusche K.

Die Kartusche K der Fig. 17 unterscheidet sich von der Kartusche K der Fig. 16 lediglich in der Form ihres Querschnitts bzw. Profilquerschnitts quer zur Längsachse BA. Anstelle des Rechteckprofils der

Fig. 16 hat die Kartusche der Fig. 17 ein Sinuswellen-Profil. Sie könnte auch ein Dreieckwellen-Profil haben (nicht gezeigt).

Der linke ovalförmige Bereich zeigt schematisch den Heizbetrieb dieser Kartusche K, nämlich «Wasser rein, Wärme raus».

Der rechte ovalförmige Bereich zeigt schematisch den Ladebetrieb dieser Kartusche K, nämlich «Wärme rein, Wasser raus».

Da die beiden semipermeablen Wandbereiche WB1 und WB2 aus Metall bestehen, können an jedem von ihnen sowohl Wasser bzw. Wasserdampf als auch Wärme gut sowohl in die Kartusche K hinein als auch aus der Kartusche heraus transportiert werden.

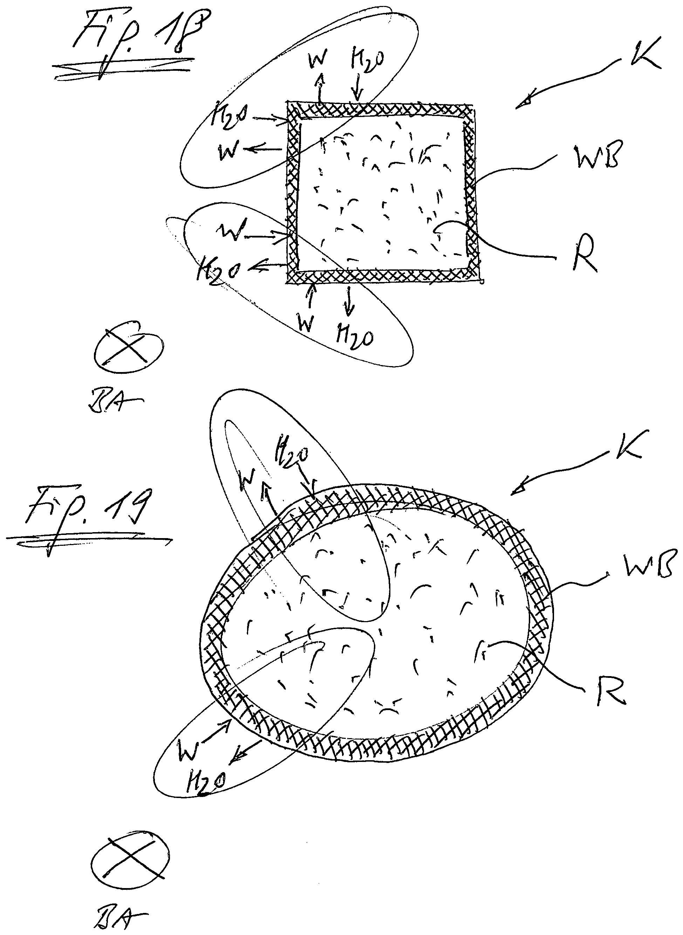

In Fig. 18 ist eine Schnittansicht einer stabförmigen Kartusche K gezeigt. Die Schnittebene ist orthogonal zu einer Längsachse BA der plattenartigen Kartusche K.

Die Kartusche K der Fig. 18 unterscheidet sich von der Kartusche K der Fig. 16 lediglich in der Form ihres Querschnitts bzw. Profilquerschnitts quer zur Längsachse BA. Anstelle des Rechteckprofils der

Fig. 16 hat die Kartusche der Fig. 18 ein Quadratprofil. Sie könnte auch ein Dreiecksprofil haben (nicht gezeigt).

Der obere ovalförmige Bereich zeigt schematisch den Heizbetrieb dieser Kartusche K, nämlich «Wasser rein, Wärme raus».

Der untere ovalförmige Bereich zeigt schematisch den Ladebetrieb dieser Kartusche K, nämlich «Wärme rein, Wasser raus».

Da sämtliche Wandbereiche WB semipermeabel sind aus Metall bestehen, können an jedem von ihnen sowohl Wasser bzw. Wasserdampf als auch Wärme gut sowohl in die Kartusche K hinein als auch aus der Kartusche heraus transportiert werden.

In Fig. 19 ist eine Schnittansicht einer weiteren Variante einer stabförmigen Kartusche gezeigt. Die Schnittebene ist orthogonal zu einer Längsachse BA der plattenartigen Kartusche K.

Die Kartusche K der Fig. 19 unterscheidet sich von der Kartusche K der Fig. 18 lediglich in der Form ihres Querschnitts bzw. Profilquerschnitts quer zur Längsachse BA. Anstelle des Quadratprofils der

Fig. 18 hat die Kartusche der Fig. 19 ein Kreisprofil. Sie könnte auch ein Kreisringprofil haben (nicht gezeigt).

Der obere ovalförmige Bereich zeigt schematisch den Heizbetrieb dieser Kartusche K, nämlich «Wasser rein, Wärme raus».

Der untere ovalförmige Bereich zeigt schematisch den Ladebetrieb dieser Kartusche K, nämlich «Wärme rein, Wasser raus».

Da sämtliche Wandbereiche WB semipermeabel sind aus Metall bestehen, können an jedem von ihnen sowohl Wasser bzw. Wasserdampf als auch Wärme gut sowohl in die Kartusche K hinein als auch aus der Kartusche heraus transportiert werden.

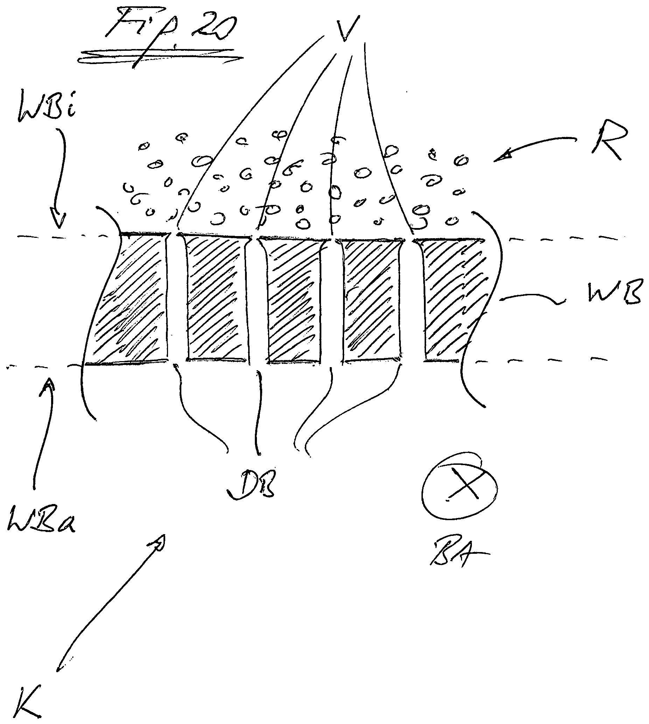

In Fig. 20 ist eine Schnittansicht einer weiteren Ausführung eines semipermeablen Wandbereichs einer Kartusche K entlang einer Schnittebene senkrecht zur Ebene des Wandbereichs WB bzw. senkrecht zur Tangentialebene des Wandbereichs gezeigt. Diese Ausführung unterscheidet sich von der weiter oben erwähnten semipermeablen Metallkeramik-Ausführung. Man erkennt mehrere Durchgangs-Bohrungen DB, die sich jeweils von der äusseren Wandfläche WBa des semipermeablen Wandbereichs WB bis zur inneren Wandfläche WBi des semipermeablen Wandbereichs WB erstrecken. Der Querschnitt der Durchgangs-Bohrungen DB hat jeweils im Bereich der inneren Wandfläche WBi eine Verengung V. Da der Wandbereich WB aus Metall besteht, können an ihm sowohl Wasser bzw. Wasserdampf als auch Wärme gut transportiert werden. Aufgrund der Verengung V wird der Austritt von Anhydrat-Partikeln oder von Hydrat-Partikeln aus dem Reaktionsraum erschwert, während beim Heizbetrieb Wasser und Wasserdampf an den Verengungen V leicht in den Reaktionsraum R hineingelangen kann und beim Ladebetrieb Wasser und Wasserdampf an den Verengungen V leicht aus dem Reaktionsraum R heraus gelangen kann.

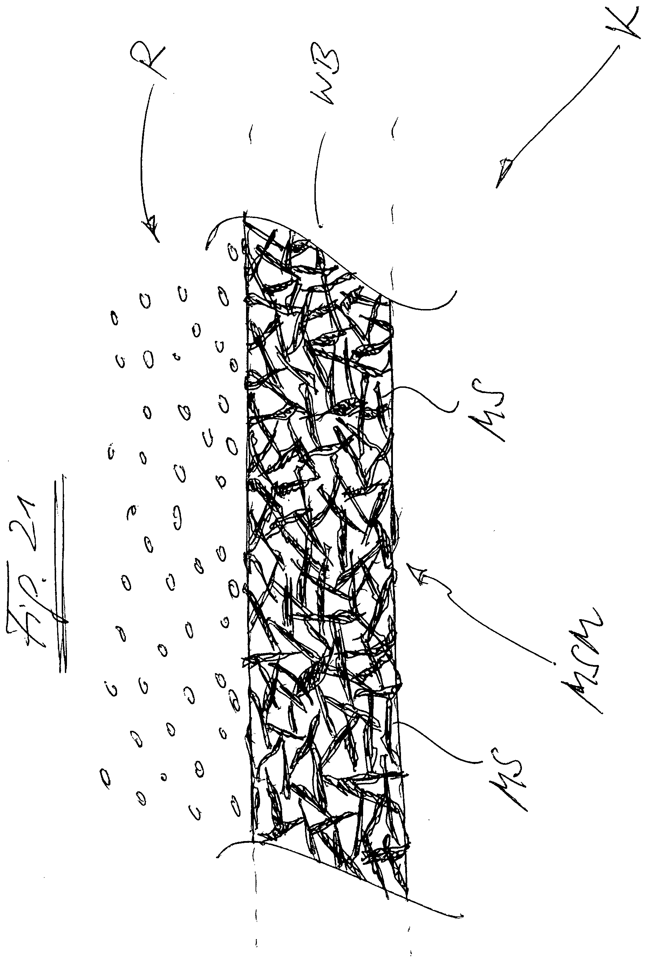

In Fig. 21 ist eine Schnittansicht einer weiteren Ausführung eines semipermeablen Wandbereichs einer Kartusche K entlang einer Schnittebene senkrecht zur Ebene des Wandbereichs WB bzw. senkrecht zur Tangentialebene des Wandbereichs schematisch gezeigt. Diese Ausführung unterscheidet sich ebenfalls von der weiter oben erwähnten semipermeablen Metallkeramik-Ausführung. Man erkennt Metallspäne MS, die mit einem anorganischen Klebemittel (nicht gezeigt) miteinander verbunden sind und eine dreidimensionale Metallspan-Matrix bilden.

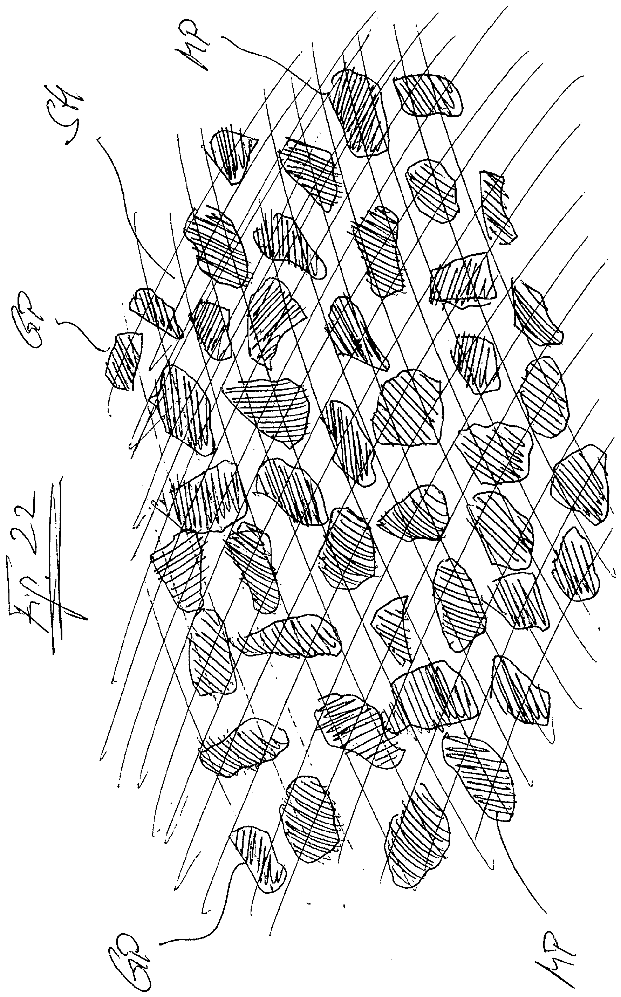

In Fig. 22 ist eine Schnittansicht einer ersten Ausführung einer Kartuschenfüllung schematisch gezeigt. Man erkennt a) eine durch Salzhydrat SH gebildete erste Phase, die mehr oder weniger kontinuierlich bzw. mehr oder weniger porös sein kann (durch Kreuzschraffur dargestellt). Ausserdem erkennt man b) in der ersten Phase gleichmässig oder zumindest fast gleichmässig verteilte Partikel MP, GP aus einem Material mit hoher spezifischer Wärmeleitfähigkeit als zweite Phase (als schraffierte Flecken dargestellt). Die Partikel können z.B. Metall-Partikel MP oder GraphitPartikel GP sein.

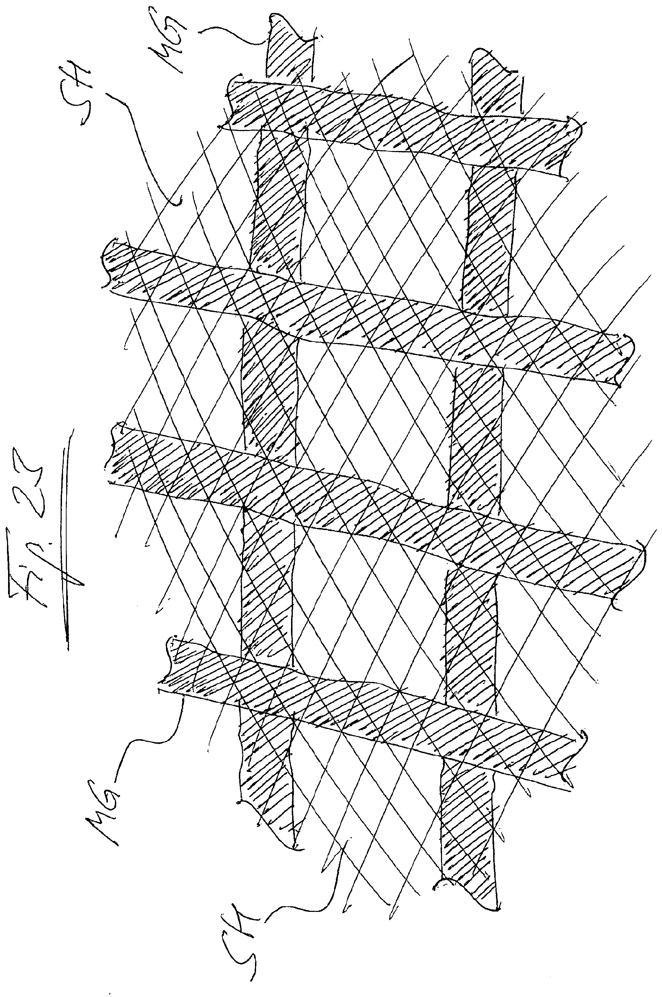

In Fig. 23 ist eine Schnittansicht einer zweiten Ausführung einer Kartuschenfüllung schematisch gezeigt. Man erkennt a) eine durch Salzhydrat SH gebildete erste Phase, die mehr oder weniger kontinuierlich bzw. mehr oder weniger porös sein kann (durch Kreuzschraffur dargestellt). Ausserdem erkennt man c) eine sich innerhalb der ersten Phase erstreckende Gitterstruktur MG aus einem Material mit hoher spezifischer Wärmeleitfähigkeit als zweite Phase (als schraffierte dunkle Bänder dargestellt).

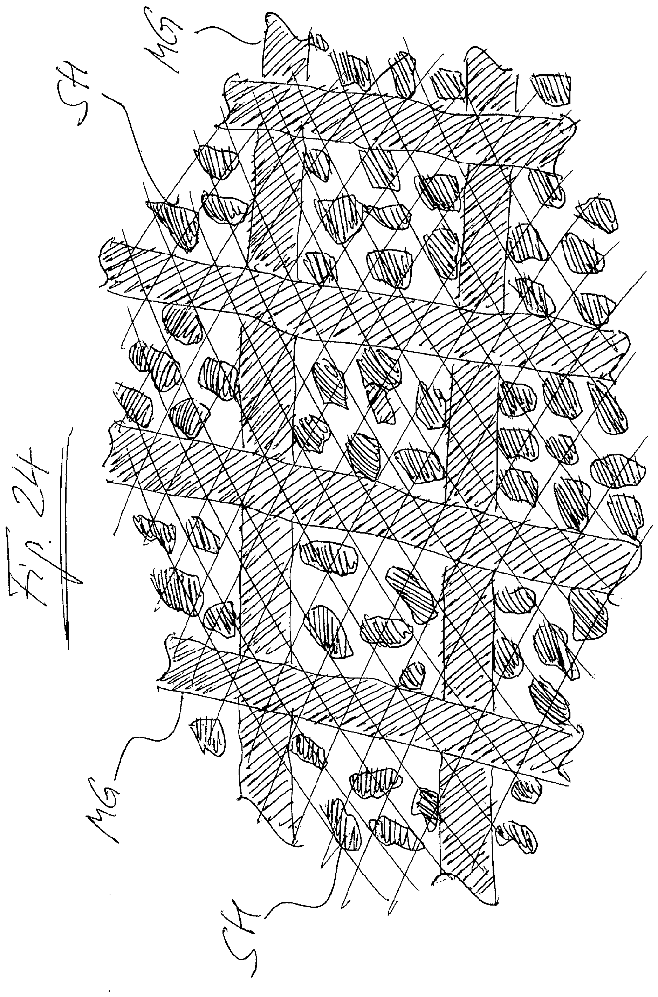

In Fig. 24 ist eine Schnittansicht einer dritten Ausführung einer Kartuschenfüllung schematisch gezeigt. Man erkennt a) eine durch Salzhydrat SH gebildete erste Phase, die mehr oder weniger kontinuierlich bzw. mehr oder weniger porös sein kann (durch Kreuzschraffur dargestellt). Ausserdem erkennt man einerseits b) in der ersten Phase gleichmässig oder zumindest fast gleichmässig verteilte Partikel MP, GP aus einem Material mit hoher spezifischer Wärmeleitfähigkeit als zweite Phase (als schraffierte Flecken dargestellt) und andererseits c) eine sich innerhalb der ersten Phase erstreckende Gitterstruktur MG aus einem Material mit hoher spezifischer Wärmeleitfähigkeit als dritte Phase (als schraffierte dunkle Bänder dargestellt).

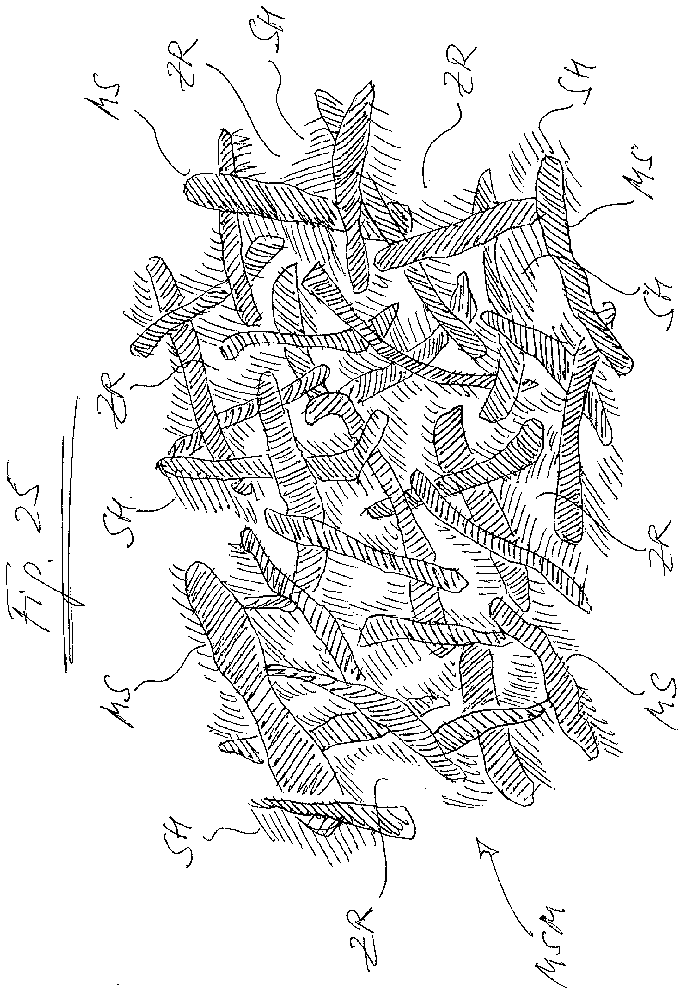

In Fig. 25 ist eine Schnittansicht einer vierten Ausführung einer Kartuschenfüllung schematisch gezeigt. Man erkennt einerseits d) Metallspäne MS (als dunkle schraffierte Flecken dargestellt), die mit einem anorganischen Klebemittel miteinander verbunden sind (nicht gezeigt) und eine dreidimensionale Metallspan-Matrix MSM bilden, und andererseits a) mit Hydrat, d.h. der hydratisierten Form eines Salzhydrats SH (durch Kreuzschraffur dargestellt), zumindest partiell gefüllte Zwischenräume ZR der Metallspan-Matrix MSM.

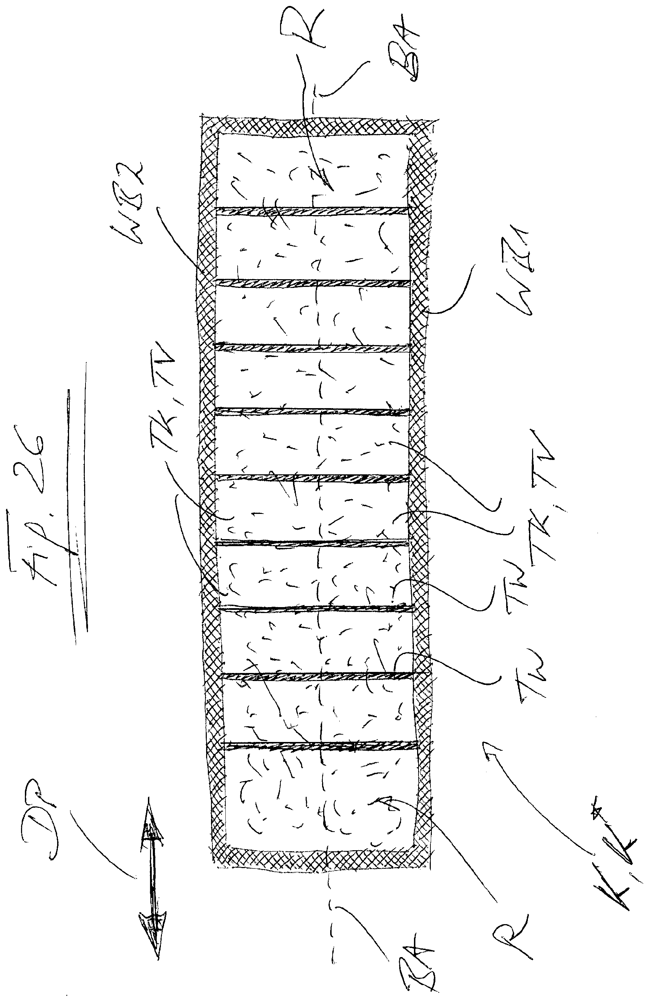

In Fig. 26 ist eine Schnittansicht eines Behälters in Form einer Kartusche K bzw. einer Kartusche K* schematisch gezeigt. Die Schnittebene ist parallel zu einer Längsachse BA der Kartusche K bzw. K* Man erkennt entlang seiner Behälterachse BA beabstandet angeordnete impermeable Trennwände TW, welche für das Anhydrat, das Hydrat, Wasser und Wasserdampf undurchlässig sind und welche das Volumen des Behälters K bzw. K*, d.h. den Reaktionsraum R, in entlang der Behälterachse BA angeordnete Teilkammern TK bzw. Teilvolumina TV unterteilen. Die Kartusche K bzw. K* enthält einen ebenen ersten Wandbereich WB1 aus Metall (als Kreuzschraffur gezeigt), welcher als semipermeabler Wandbereich mit einer Vielzahl von Löchern gebildet ist. Der erste Wandbereich WB1 kann aus Metallkeramik nach der Art eines Keramikfilters gebildet sein. Die Kartusche K bzw. K* enthält einen ebenen zweiten Wandbereich WB2 aus Metall (als Kreuzschraffur gezeigt), welcher als semipermeabler Wandbereich mit einer Vielzahl von Löchern gebildet ist. Der zweite Wandbereich WB2 kann aus Metallkeramik nach der Art eines Keramikfilters gebildet sein. Als Metall wird z.B. Kupfer, Aluminium, Stahl, etc. verwendet. Der Doppelpfeil DP zeigt die beiden Richtungen parallel zur Behälterachse BA entlang welcher die Kartusche K bzw K* in ein Wasserbad eingetaucht und aus dem Wasserbad aufgetaucht werden kann.

## Patentansprüche

1. Verfahren zum Erzeugen (Abgeben, Freisetzen) oder Speichern von Wärme (W) durch Reaktion zwischen einerseits einem Feststoff und/oder einer ersten Flüssigkeit (1) und andererseits einem Gas und/oder einer zweiten Flüssigkeit (2) (Ammoniak, Wasser, Alkohol, Keton), wobei die dabei beim Erzeugen von Wärme entstehende bzw. beim Speichern von Wärme zu speichernde Reaktionswärme (W) beim Erzeugen von Wärme abgeführt bzw. beim Speichern von Wärme zugeführt wird, wobei a1) einerseits eine dosierte Menge des Feststoffs und/oder der ersten Flüssigkeit (1) einem Reaktionsraum (R) zugeführt wird und
a2) andererseits beim Erzeugen von Wärme eine dosierte Menge des Gases und/oder der zweiten Flüssigkeit (2) bzw. beim Speichern von Wärme eine dosierte Menge Wärme (W) dem Reaktionsraum (R) zugeführt wird,
wobei in dem Reaktionsraum (R)
a1) der Feststoff und/oder die erste Flüssigkeit (1) und
a2) beim Erzeugen von Wärme das Gas und/oder die zweite Flüssigkeit (2) bzw. beim Speichern von Wärme die Wärme (W)
miteinander in Kontakt gebracht werden und beim Erzeugen von Wärme die frei werdende Wärme aus dem Reaktionsraum (R) abgeführt wird bzw. beim Speichern von Wärme das frei werdende Gas und/oder die frei werdende zweite Flüssigkeit (2) aus dem Reaktionsraum (R) abgeführt wird bzw. werden,
wobei der Feststoff und/oder die erste Flüssigkeit (1) beim Erzeugen von Wärme ein Anhydrat bzw. beim Speichern von Wärme ein Hydrat ist, wobei die Wärme durch Reaktion unter Beteiligung von Anhydrat beim Erzeugen von Wärme bzw. von Hydrat beim Speichern von Wärme einerseits und von Wasser und/oder Wasserdampf andererseits erzeugt bzw. gespeichert wird, wobei dem Reaktionsraum (R) einerseits eine dosierte Menge des Anhydrats beim Erzeugen von Wärme bzw. des Hydrats beim Speichern von Wärme und andererseits eine dosierte Menge Wasser und/oder Wasserdampf beim Erzeugen von Wärme bzw. eine dosierte Menge Wärme beim Speichern von Wärme zugeführt wird,
**dadurch gekennzeichnet, dass**
ein Innenraum eines Behälters (K, K*) mit dem Anhydrat und/oder dem Hydrat partiell gefüllt ist und der Behälter (K, K*) einen semipermeablen Wandbereich (WB1, WB2) aufweist, welcher für das in ihm enthaltene Anhydrat oder Hydrat undurchlässig ist und für Wasser oder Wasserdampf durchlässig ist.

2. Verfahren nach Anspruch 1, **dadurch gekennzeichnet, dass** der Behälter (K, K*) entlang einer Behälterachse (BA) einen konstanten Querschnitt quer zur Behälterachse (BA) aufweist, wobei vorteilhaft vorgesehen ist, dass der Behälter (K, K*) entlang seiner Behälterachse (BA) beabstandet angeordnete impermeable Trennwände (TW) aufweist, welche für das Anhydrat, das Hydrat, Wasser und Wasserdampf undurchlässig sind und welche den Innenraum des Behälters (K) in entlang der Behälterachse (BA) angeordnete Teilkammern (TK) bzw. Teilvolumina (TV) unterteilen.

3. Behälter (K, K*) zur Verwendung bei einem Verfahren gemäss Anspruch 1, **dadurch gekennzeichnet, dass** der Innenraum des Behälters (K, K*) mit einem Anhydrat und/oder einem Hydrat partiell gefüllt ist und der Behälter (K) einen semipermeablen Wandbereich (WB1, WB2) aufweist, welcher für das in ihm enthaltene Anhydrat oder Hydrat undurchlässig ist und für Wasser oder Wasserdampf durchlässig ist.

4. Behälter (K) nach Anspruch 3, **dadurch gekennzeichnet, dass** der semipermeable Wandbereich (WB1, WB2, WB) aus Metall gebildet ist;
und/oder der Innenraum des Behälters (K) von einem ersten semipermeablen Wandbereich (WB1) aus Metall und einem zweiten semipermeablen Wandbereich (WB2) aus Metall begrenzt ist, zwischen denen sich der Innenraum des Behälters (K) erstreckt;
und/oder zumindest ein Teil der semipermeablen Wandbereiche (WB1, WB2, WB) aus Metallkeramik gebildet ist.

5. Behälter (K) nach Anspruch 3 oder 4, **dadurch gekennzeichnet, dass** zumindest ein Teil der semipermeablen Wandbereiche (WB1, WB2, WB) aus Metall gebildet ist und eine Vielzahl von Durchgangs-Bohrungen (DB) aufweist, die sich jeweils von der äusseren Wandfläche (WBa) des semipermeablen Wandbereichs (WB) bis zur inneren Wandfläche (WBi) des semipermeablen Wandbereichs (WB) erstrecken,
wobei vorteilhaft vorgesehen ist, dass der Querschnitt der Durchgangs-Bohrungen (DB) eine Verengung (V) aufweist.

6. Behälter (K) nach einem der Ansprüche 3 bis 5, **dadurch gekennzeichnet, dass** zumindest ein Teil der semipermeablen Wandbereiche (WB1, WB2, WB) aus einer dreidimensionalen Metallspan-Matrix (MSM) gebildet ist, in welcher Metallspäne (MS) mit einem anorganischen Klebemittel (WG) miteinander verbunden sind und welche zwischen den Metallspänen (MS) Hohlräume aufweist; und/oder der Innenraum des Behälters (K) eine Füllung aufweist, welche eine durch Salzhydrat gebildete erste Phase, die kontinuierlich und porös ist, und in der ersten Phase verteilte Partikel (MP) aus einem Material mit hoher spezifischer Wärmeleitfähigkeit als zweite Phase enthält;
und/oder der Innenraum des Behälters (K) eine Füllung aufweist, welche eine durch Salzhydrat gebildete erste Phase, die kontinuierlich und porös ist, und eine sich innerhalb der ersten Phase erstreckende Gitterstruktur (MG) aus einem Material mit hoher spezifischer Wärmeleitfähigkeit als zweite Phase enthält;
und/oder der Innenraum des Behälters (K) eine Füllung aufweist, in welcher Metallspäne (MS) mit einem anorganischen Klebemittel miteinander verbunden sind und eine dreidimensionale Metallspan-Matrix (MSM) bilden und in welcher Zwischenräume der Metallspan-Matrix mit Hydrat, d.h. der hydratisierten Form eines Salzhydrats, zumindest partiell gefüllt sind.

7. Behälter (K*) zur Verwendung bei einem Verfahren zum Erzeugen oder Speichern von Wärme, insbesondere zur Verwendung in einem Verfahren gemäss einem der Ansprüche 1 oder 2, **dadurch gekennzeichnet, dass** der Behälter (K*) ein poröses Gebilde ist, welches eine metallische Matrix aufweist und ein Salzhydrat aufweist, welches die Poren bzw. mikroskopischen Zwischenräume der metallischen Matrix im hydratisierten Zustand des Salzhydrats zumindest partiell ausfüllt und für Wasser oder Wasserdampf durchlässig ist.

8. Behälter (K*) nach Anspruch 7, **dadurch gekennzeichnet, dass** die metallische Matrix Metallpartikel (MP) aufweist, welche durch Sintern zu einem Metall-Sinterblock bzw. einem Metall-Keramikblock miteinander verbunden sind und eine dreidimensionale Metallkeramik-Matrix (MKM) bilden; und/oder die metallische Matrix Metallspäne (MS) aufweist, welche mit einem anorganischen Klebemittel miteinander verbunden sind und eine dreidimensionale Metallspan-Matrix (MSM) bilden;
und/oder in dem Salzhydrat verteilte Partikel (MP, GP) aus einem Material mit hoher spezifischer Wärmeleitfähigkeit enthalten sind;
und/oder in dem Salzhydrat eine Gitterstruktur (MG, WR) mit hoher spezifischer Wärmeleitfähigkeit enthalten ist;
und/oder das Salzhydrat eine poröse Struktur hat;
und/oder die metallische Matrix Aluminium enthält;
wobei vorteilhaft vorgesehen ist, dass das anorganische Klebemittel Wasserglas, insbesondere Natrium-Silikat und/oder Kalium-Silikat, enthält;
und/oder in dem Salzhydrat Aluminium-Partikel und/oder Graphit-Partikel verteilt sind.

9. Behälter (K, K*) nach einem der Ansprüche 3 bis 6 bzw. nach einem der Ansprüche 7 oder 8, **dadurch gekennzeichnet, dass** der Behälter (K, K*) entlang einer Behälterachse (BA) einen konstanten Querschnitt quer zur Behälterachse (BA) aufweist, wobei vorteilhaft vorgesehen ist, dass der Behälter (K, K*) entlang seiner Behälterachse (BA) beabstandet angeordnete impermeable Trennwände (TW) aufweist, welche für das Anhydrat, das Hydrat, Wasser und Wasserdampf undurchlässig sind und welche den Innenraum des Behälters (K) in entlang der Behälterachse (BA) angeordnete Teilkammern (TK) bzw. Teilvolumina (TV) unterteilen.

10. Behälter (K, K*) nach Anspruch 9, **dadurch gekennzeichnet, dass** der Querschnitt des Behälters (K, K*) die Form eines Rechtecks, eines Quadrats, eines Kreises oder eines Kreisrings, eines Dreiecks oder eines Sechsecks; oder die Form eines periodischen Musters, insbesondere einer Welle mit Sinusprofil oder Dreiecksprofil, aufweist.

11. Behälter-Anordnung, **dadurch gekennzeichnet, dass** sie mehrere nebeneinander und parallel zueinander angeordnete Behälter (K) und/oder Behälter (K*) gemäss einem der Ansprüche 3 bis 10 aufweist.

12. Verfahren zum Herstellen eines Behälters (K*) zur Verwendung bei einem Verfahren zum Erzeugen oder Speichern von Wärme, insbesondere zum Herstellen eines Behälters (K*) gemäss einem der Ansprüche 7 bis 9, welches die folgenden Schritte aufweist:
a) Bilden einer dreidimensionalen metallischen Matrix, welche mikroskopische Zwischenräume aufweist; und
b) Füllen der mikroskopischen Zwischenräume mit einer wässrigen Aufschlämmung eines Salzhydrats,
wobei vorteilhaft vorgesehen ist, dass Schritt a) durch Sintern metallischer Partikel;
und/oder durch Verkleben metallischer Partikel mittels eines anorganischen Klebemittels erfolgt, wobei vorteilhaft vorgesehen ist, dass Schritt b) durch Hineinpressen der wässrigen Aufschlämmung in die mikroskopischen Zwischenräume erfolgt.

13. Verfahren zum Herstellen eines Behälters (K*) zur Verwendung bei einem Verfahren zum Erzeugen oder Speichern von Wärme, insbesondere zum Herstellen eines Behälters (K*) gemäss einem der Ansprüche 7 bis 9, welches die folgenden Schritte aufweist:
a) Bereitstellen einer wässrigen Aufschlämmung eines Salzhydrats, in welcher metallische Partikel suspendiert sind; und
b) Bilden einer dreidimensionalen metallischen Matrix durch Komprimieren der Aufschlämmung, wobei vorteilhaft vorgesehen ist, dass in Schritt b) ein Sintern der metallischen Partikel;
und/oder ein Verkleben der metallischen Partikel mittels eines anorganischen Klebemittels erfolgt.

## Claims

1. Method for generating (releasing, emitting) or storing heat (W) by reaction between, on the one hand, a solid and/or a first liquid (1) and, on the other hand, a gas and/or a second liquid (2) (ammonia, water, alcohol, ketone), wherein the reaction heat (W) generated during the generation of heat or to be stored during the storage of heat is dissipated during the generation of heat or supplied during the storage of heat, wherein
a1) on the one hand, a metered quantity of the solid and/or the first liquid (1) is supplied to a reaction chamber (R) and
a2) on the other hand, a metered quantity of the gas and/or the second liquid (2) or a metered quantity of heat (W) is supplied to the reaction chamber (R),
wherein in the reaction chamber (R)
a1) the solid and/or the first liquid (1) and
a2) during the generation of heat the gas and/or the second liquid (2) or during the storage of heat the heat (W)
are brought into contact with one another and during the generation of heat the heat released is removed from the reaction chamber (R) or during the storage of heat the gas and/or the second liquid (2) released is removed from the reaction chamber (R),
wherein the solid and/or the first liquid (1) is an anhydrate during the generation of heat or a hydrate during the storage of heat, wherein the heat is generated or stored by reaction involving anhydrate during the generation of heat or hydrate during the storage of heat on the one hand and water and/or water vapor on the other hand, wherein a metered quantity of the anhydrate during the generation of heat or of the hydrate during the storage of heat is fed to the reaction chamber (R) on the one hand and a metered quantity of water and/or water vapor during the generation of heat or a metered quantity of heat during the storage of heat is fed to the reaction chamber (R) on the other hand,
**characterized in that**
an inner space of a container (K, K*) is partially filled with the anhydrate and/or the hydrate, and the container (K, K*) has a semipermeable wall region (WB1, WB2) which is impermeable to the anhydrate or hydrate contained therein and permeable to water or water vapor.

2. Method according to claim 1, **characterized in that** the container (K, K*) has a constant cross-section transverse to the container axis (BA) along a container axis (BA), it being advantageous for the container (K, K*) to has impermeable partition walls (TW) arranged at intervals along its container axis (BA), which are impermeable to the anhydrate, the hydrate, water and water vapour and which divide the interior of the container (K) into part chambers (TK) or part volumes (TV) arranged along the container axis (BA).

3. Container (K, K*) for use in a method according to claim 1, **characterized in that** the interior of the container (K, K*) is partially filled with an anhydrate and/or a hydrate and the container (K) has a semipermeable wall region (WB1, WB2) which is impermeable to the anhydrate or hydrate contained therein and permeable to water or water vapor.

4. Container (K) according to claim 3, **characterized in that** the semipermeable wall region (WB1, WB2, WB) is made of metal;
and/or the interior of the container (K) is bounded by a first semipermeable wall region (WB1) made of metal and a second semipermeable wall region (WB2) made of metal, between which the interior of the container (K) extends;
and/or at least part of the semipermeable wall areas (WB1, WB2, WB) is formed from metal ceramic.

5. Container (K) according to claim 3 or 4, **characterized in that** at least part of the semipermeable wall areas (WB1, WB2, WB) is formed from metal and has a plurality of through-bores (DB), which each extend from the outer wall surface (WBa) of the semipermeable wall region (WB) to the inner wall surface (WBi) of the semipermeable wall region (WB),
wherein it is advantageously provided that the cross section of the through-bores (DB) has a constriction (V).

6. Container (K) according to any of claims 3 to 5, **characterized in that** at least part of the semipermeable wall areas (WB1, WB2, WB) is formed from a three-dimensional metal chip matrix (MSM) in which metal chips (MS) are bonded together with an inorganic adhesive (WG) and which has cavities between the metal chips (MS);
and/or the interior of the container (K) has a filling which contains a first phase formed by salt hydrate, which is continuous and porous, and particles (MP) distributed in the first phase and made of a material with high specific thermal conductivity as a second phase;
and/or the interior of the container (K) has a filling which contains a first phase formed by salt hydrate, which is continuous and porous, and a lattice structure (MG) extending within the first phase and made of a material with high specific thermal conductivity as a second phase;
and/or the interior of the container (K) has a filling in which metal chips (MS) are bonded together with an inorganic adhesive and form a three-dimensional metal chip matrix (MSM), and in which interstices of the metal chip matrix are at least partially filled with hydrate, i.e., the hydrated form of a salt hydrate.

7. Container (K*) for use in a method for generating or storing heat, in particular for use in a method according to one of claims 1 or 2, **characterized in that** the container (K*) is a porous structure which has a metallic matrix and a salt hydrate which at least partially fills the pores or microscopic interstices of the metallic matrix in the hydrated state of the salt hydrate and is permeable to water or water vapor.

8. Container (K*) according to claim 7, **characterized in that** the metallic matrix comprises metal particles (MP) which are bonded together by sintering to form a metal sinter block or a metal-ceramic block and form a three-dimensional metal-ceramic matrix (MKM);
and/or the metallic matrix comprises metal chips (MS) which are bonded together by an inorganic adhesive and form a three-dimensional metal chip matrix (MSM);
and/or particles (MP, GP) of a material with high specific thermal conductivity are distributed in the salt hydrate;
and/or a lattice structure (MG, WR) with high specific thermal conductivity is contained in the salt hydrate;
and/or the salt hydrate has a porous structure;
and/or the metallic matrix contains aluminum;
wherein it is advantageously provided that the inorganic adhesive contains water glass, in particular sodium silicate and/or potassium silicate;
and/or aluminum particles and/or graphite particles are distributed in the salt hydrate.

9. Container (K, K*) according to one of claims 3 to 6 or according to one of claims 7 or 8, **characterized in that** the container (K, K*) has a constant cross-section transverse to the container axis (BA) along a container axis (BA), it being advantageous that the container (K, K*) has impermeable partition walls (TW) spaced apart along its container axis (BA), which are impermeable to the anhydrate, the hydrate, water, and water vapor and which divide the interior of the container (K) into part chambers (TK) or part volumes (TV) arranged along the container axis (BA).

10. Container (K, K*) according to claim 9, **characterized in that** the cross-section of the container (K, K*) has the shape of a rectangle, a square, a circle or a circular ring, a triangle or a hexagon; or the shape of a periodic pattern, in particular a wave with a sinusoidal profile or a triangular profile.

11. Container arrangement, **characterized in that** it comprises several containers (K) and/or containers (K*) arranged next to each other and parallel to each other according to one of claims 3 to 10.

12. Method for manufacturing a container (K*) for use in a method for generating or storing heat, in particular for manufacturing a container (K*) according to one of claims 7 to 9, comprising the following steps:
a) forming a three-dimensional metallic matrix having microscopic interstices; and
b) filling the microscopic interstices with an aqueous slurry of a salt hydrate,
wherein it is advantageous that step a) is carried out by sintering metallic particles;
and/or by bonding metallic particles by means of an inorganic adhesive,
wherein it is advantageously provided that step b) is carried out by pressing the aqueous slurry into the microscopic interstices.

13. Method for producing a container (K*) for use in a method for generating or storing heat, in particular for producing a container (K*) according to one of claims 7 to 9, comprising the following steps:
a) providing an aqueous slurry of a salt hydrate in which metallic particles are suspended; and
b) forming a three-dimensional metallic matrix by compressing the slurry,
wherein it is advantageously provided that in step b) sintering of the metallic particles;
and/or bonding of the metallic particles by means of an inorganic adhesive takes place in step b).

## Revendications

1. Procédé pour produire (délivrer, libérer) ou stocker de la chaleur (W) par réaction entre, d'une part, un solide et/ou un premier liquide (1) et, d'autre part, un gaz et/ou un deuxième liquide (2) (ammoniac, eau, alcool, cétone), la chaleur de réaction (W) ainsi produite lors de la production de chaleur ou à stocker lors du stockage de chaleur étant dissipée lors de la production de chaleur ou fournie lors du stockage de chaleur, et dans lequel
a1) d'une part, une quantité dosée de la matière solide et/ou du premier liquide (1) est amenée dans un espace de réaction (R) et
a2) d'autre part, une quantité dosée du gaz et/ou du deuxième liquide (2) ou une quantité dosée de chaleur (W) est amenée dans l'espace de réaction (R),
et dans lequel, dans l'espace de réaction (R)
a1) la matière solide et/ou le premier liquide (1) et
a2) lors de la production de chaleur, le gaz et/ou le deuxième liquide (2) ou, lors du stockage de chaleur, la chaleur (W)
sont mis en contact les uns avec les autres et, lors de la production de chaleur, la chaleur libérée est évacuée de la chambre de réaction (R) ou, lors du stockage de chaleur, le gaz libéré et/ou le deuxième liquide libéré (2) est évacué de la chambre de réaction (R),
la matière solide et/ou le premier liquide (1) étant un anhydrate lors de la production de chaleur ou un hydrate lors du stockage de chaleur, la chaleur étant produite ou stockée par réaction entre l'anhydrate lors de la production de chaleur ou l'hydrate lors du stockage de chaleur d'une part et l'eau et/ou la vapeur d'eau d'autre part, une quantité dosée de l'anhydrate, lors de la production de chaleur, ou de l'hydrate, lors du stockage de chaleur, étant amenée dans l'espace de réaction (R) d'une part et une quantité dosée d'eau et/ou de vapeur d'eau, lors de la production de chaleur, ou une quantité dosée de chaleur, lors du stockage de chaleur, étant amenée dans l'espace de réaction (R) d'autre part,
**caractérisé en ce que**
un espace intérieur d'un récipient (K, K*) est partiellement rempli avec l'anhydrate et/ou l'hydrate et le récipient (K, K*) présente une zone de paroi semi-perméable (WB1, WB2) qui est imperméable à l'anhydrate ou à l'hydrate qu'elle contient et perméable à l'eau ou à la vapeur d'eau.

2. Procédé selon la revendication 1, **caractérisé en ce que** le récipient (K, K*) présente, le long d'un axe de récipient (BA), une section transversale constante perpendiculaire à l'axe de récipient (BA), étant avantageusement prévu que le récipient (K, K*) présente, le long de son axe (BA), des cloisons imperméables (TW) espacées les unes des autres, qui sont imperméables à l'anhydrate, à l'hydrate, à l'eau et à la vapeur d'eau et qui divisent l'espace intérieur du récipient (K) en compartiments (TK) ou volumes partiels (TV) disposés le long de l'axe de récipient (BA).

3. Récipient (K, K*) destiné à être utilisé dans un procédé selon la revendication 1, **caractérisé en ce que** l'espace intérieur du récipient (K, K*) est partiellement rempli d'un anhydrate et/ou d'un hydrate et le récipient (K) comporte une zone de paroi semi-perméable (WB1, WB2) qui est imperméable à l'anhydrate ou à l'hydrate qu'il contient et perméable à l'eau ou à la vapeur d'eau.

4. Récipient (K) selon la revendication 3, **caractérisé en ce que** la zone de paroi semi-perméable (WB1, WB2, WB) est formée de métal,
et/ou l'espace intérieur du récipient (K) est délimité par une première zone de paroi semi-perméable (WB1) en métal et une deuxième zone de paroi semi-perméable (WB2) en métal, entre lesquelles s'étend l'espace intérieur du récipient (K);
et/ou au moins une partie des zones de paroi semi-perméables (WB1, WB2, WB) est formée de métal-céramique.

5. Récipient (K) selon la revendication 3 ou 4, **caractérisé en ce qu'**au moins une partie des zones de paroi semi-perméables (WB1, WB2, WB) est formée de métal et présente une pluralité d'alésages traversants (DB) qui s'étendent chacun de la surface de paroi extérieure (WBa) de la zone de paroi semi-perméable (WB) jusqu'à la surface de paroi intérieure (WBi) de la zone de paroi semi-perméable (WB),
dans lequel il est avantageusement prévu que la section transversale des alésages traversants (DB) présente un rétrécissement (V).

6. Récipient (K) selon l'une des revendications 3 à 5, **caractérisé en ce qu'**au moins une partie des zones de paroi semi-perméables (WB1, WB2, WB) est formée d'une matrice tridimensionnelle de copeaux métalliques (MSM) dans laquelle des copeaux métalliques (MS) sont liés entre eux par un adhésif inorganique (WG) et qui présente des espaces creux entre les copeaux métalliques (MS);
et/ou l'espace intérieur du récipient (K) comporte un remplissage qui contient une première phase formée par un hydrate de sel, qui est continue et poreuse, et des particules (MP) réparties dans la première phase, constituées d'un matériau à conductivité thermique spécifique élevée, en tant que deuxième phase;
et/ou l'espace intérieur du récipient (K) comporte un remplissage qui contient une première phase formée par un hydrate de sel, qui est continue et poreuse, et une structure en treillis (MG) s'étendant à l'intérieur de la première phase, constituée d'un matériau à conductivité thermique spécifique élevée, en tant que deuxième phase;
et/ou l'espace intérieur du récipient (K) présente un remplissage dans lequel des copeaux métalliques (MS) sont liés entre eux par un adhésif inorganique et forment une matrice tridimensionnelle de copeaux métalliques (MSM) et dans lequel les espaces intermédiaires de la matrice de copeaux métalliques sont remplis au moins partiellement d'hydrate, c'est-à-dire la forme hydratée d'un hydrate de sel.

7. Récipient (K*) destiné à être utilisé dans un procédé de production ou de stockage de chaleur, en particulier pour être utilisé dans un procédé selon l'une des revendications 1 ou 2, **caractérisé en ce que** le récipient (K*) est une structure poreuse qui comprend une matrice métallique et un hydrate de sel qui remplit au moins partiellement les pores ou les espaces microscopiques de la matrice métallique à l'état hydraté de l'hydrate de sel et qui est perméable à l'eau ou à la vapeur d'eau.

8. Récipient (K*) selon la revendication 7, **caractérisé en ce que** la matrice métallique comprend des particules métalliques (MP) qui sont reliées entre elles par frittage pour former un bloc métallique fritté ou un bloc métal-céramique et constituent une matrice métal-céramique tridimensionnelle (MKM);
et/ou la matrice métallique comprend des copeaux métalliques (MS) qui sont liés entre eux par un adhésif inorganique et forment une matrice tridimensionnelle de copeaux métalliques (MSM);
et/ou le sel hydraté contient des particules (MP, GP) d'un matériau à conductivité thermique spécifique élevée réparties dans celui-ci;
et/ou le sel hydraté contient une structure réticulaire (MG, WR) à conductivité thermique spécifique élevée;
et/ou le sel hydraté a une structure poreuse;
et/ou la matrice métallique contient de l'aluminium;
dans lequel il est avantageusement prévu que l'adhésif inorganique contient du verre soluble, en particulier du silicate de sodium et/ou du silicate de potassium;
et/ou dans lequel des particules d'aluminium et/ou des particules de graphite sont réparties dans le sel hydraté.

9. Récipient (K, K*) selon l'une des revendications 3 à 6 ou selon l'une des revendications 7 ou 8, **caractérisé en ce que** le récipient (K, K*) présente, le long d'un axe de récipient (BA), une section transversale constante transversalement à l'axe de récipient (BA), dans lequel il est avantageusement prévu que le récipient (K, K*) comporte, le long de son axe de récipient (BA), des cloisons imperméables (TW) espacées les unes des autres, qui sont imperméables à l'anhydrate, à l'hydrate, à l'eau et à la vapeur d'eau et qui divisent l'espace intérieur du récipient (K) en compartiments (TK) ou volumes partiels (TV) disposés le long de l'axe (BA) du récipient.

10. Récipient (K, K*) selon la revendication 9, **caractérisé en ce que** la section transversale du récipient (K, K*) a la forme d'un rectangle, d'un carré, d'un cercle ou d'un anneau circulaire, d'un triangle ou d'un hexagone; ou la forme d'un motif périodique, en particulier d'une onde avec un profil sinusoïdal ou triangulaire.

11. Disposition de récipients, **caractérisée en ce qu'**elle comprend plusieurs récipients (K) et/ou récipients (K*) disposés les uns à côté des autres et parallèlement les uns aux autres selon l'une des revendications 3 à 10.

12. Procédé de fabrication d'un récipient (K*) destiné à être utilisé dans un procédé de production ou de stockage de chaleur, en particulier pour la fabrication d'un récipient (K*) selon l'une des revendications 7 à 9, qui comprend les étapes suivantes:
a) la formation d'une matrice métallique tridimensionnelle qui présente des espaces microscopiques; et
b) le remplissage des espaces microscopiques avec une suspension aqueuse d'un hydrate de sel,
l'étape a) étant avantageusement réalisée par frittage de particules métalliques;
et/ou par collage de particules métalliques à l'aide d'un adhésif inorganique,
l'étape b) étant avantageusement réalisée par compression de la suspension aqueuse dans les interstices microscopiques.

13. Procédé de fabrication d'un récipient (K*) destiné à être utilisé dans un procédé de production ou de stockage de chaleur, en particulier pour la fabrication d'un récipient (K*) selon l'une des revendications 7 à 9, qui comprend les étapes suivantes:
a) mise à disposition d'une suspension aqueuse d'un hydrate de sel dans laquelle sont en suspension des particules métalliques; et
b) formation d'une matrice métallique tridimensionnelle par compression de la suspension,
dans lequel il est avantageusement prévu que, dans l'étape b), est effectué un frittage des particules métalliques
et/ou un collage des particules métalliques au moyen d'un adhésif inorganique.
